# EUROPEAN PATENT APPLICATION

(11) **EP 4 424 718 A1**
(43) Date of publication of application: **04.09.2024**
(21) Application number: 22887098.6
(22) Date of filing: 27.10.2022
(51) Int. Cl.: C08C 19/25, B60C 1/00, C07F 7/18, C08K 3/04, C08K 3/36, C08L 15/00

(54) **METHOD FOR PRODUCING MODIFIED CONJUGATED DIENE-BASED POLYMER, MODIFIED CONJUGATED DIENE-BASED POLYMER, POLYMER COMPOSITION, CROSSLINKED PRODUCT, TIRE, AND COMPOUND**

(30) Priority: 29.10.2021 JP 2021177186
(71) Applicant: ENEOS Materials Corporation, Tokyo, 105-7109 (JP)
(72) Inventor: KOBAYASHI Natsumi, Tokyo 105-0021 (JP); ITOU, Ken-ichi, Tokyo 105-0021 (JP); MORITA, Hiroyuki, Tokyo 105-0021 (JP)
(74) Representative: TBK
(86) International application number: PCT/JP2022/040045
(87) International publication number: WO 2023/074773

(57) **Abstract**

A modified conjugated diene-based polymer is produced using production method that includes a step of reacting a conjugated diene-based polymer having an active end with a compound [M]. The conjugated diene-based polymer having an active end is produced by polymerizing a monomer including a conjugated diene compound in the presence of a polymerization initiator including at least one of an alkali metal compound and an alkaline earth metal compound. The compound [M] has a functional group F1, a functional group F2, and a functional group F3 and no active hydrogen. F1 is a functional group such as "*¹-C(=E)-O-" (*¹ represents a bond to a carbon atom that constitutes a carbon-carbon unsaturated bond in a chain-like structure or ring-like structure, or a bond to a tertiary carbon atom), F2 is a functional group such as "-C(R⁷)=N-", and F3 is a functional group such as "-Si(R⁸)₂(OR⁹)".

## Description

### Technical Field

### [Cross-Reference to Related Applications]

The present application claims the benefit of Japanese Patent Application No. 2021-177186 filed October 29, 2021, the disclosure of which is incorporated herein by reference.

The present disclosure relates to a method for producing a modified conjugated diene-based polymer, to a modified conjugated diene-based polymer, to a polymer composition, to a cross-linked product, to a tire, and to a compound.

### Background Art

Conjugated diene-based polymers, which are produced through polymerization of a conjugated diene compound, exhibit excellent properties such as high heat resistance, high wear resistance, high mechanical strength, and good moldability, and find wide uses as industrial products including pneumatic tires, rubber vibration isolators, and rubber hoses.

As has already been known, polymer compositions for producing parts of pneumatic tires such as tread and sidewall employ a conjugated diene-based polymer and, additionally, reinforcing fillers such as carbon black and silica are conventionally incorporated into the polymer compositions, in order to enhance durability and wear resistance of such rubber products. Also, as has been conducted, a modified conjugated diene-based polymer produced by modifying a conjugated diene-based polymer with a silicon- or nitrogen-containing compound is used for enhancing compatibility between the conjugate diene-based polymer and a reinforcing material (see, for example, Patent Documents 1 to 3).

### Prior Art Documents

### Patent Documents

Patent Document 1: WO 2008/123164
Patent Document 2: Japanese Patent Application Laid-Open (kokai) No. 1999-349632
Patent Document 3: WO 2017/221943

### Summary of the Invention

### Problems to be Solved by the Invention

Under recent environmental conditions, increased awareness of saving of material and energy, increased consumers' needs for safety, and other conditions, there is demand for a rubber for automobile tires having excellent tire performance, including low fuel consumption performance (i.e., low rolling resistance), wet grip performance (i.e., safety on wet road), and wear resistance, the demand being more important than ever. Meanwhile, when the tire performance is improved by modifying a polymer ingredient, storage stability of the polymer may decrease. In such a case, the polymer may gradually deteriorate in quality to impair tire performance, or rubber shape stability of the polymer may be impaired.

The present disclosure has been established so as to solve the aforementioned problems. Thus, an object of the invention is to provide a modified conjugated diene-based polymer which exhibits suitable rubber characteristics and which ensures consistent quality and has excellent shape stability.

### Means for Solving the Problems

According to the present disclosure, there are provided a method for producing a modified conjugated diene-based polymer, a modified conjugated diene-based polymer, a polymer composition, a cross-linked product, a tire, and a compound, which are described below.

[1] A method of producing a modified conjugated diene-based polymer, the method including a step of reacting a conjugated diene-based polymer having an active end with a compound [M]; the conjugated diene-based polymer having an active end is a polymer which is produced by polymerizing a monomer including a conjugated diene compound in the presence of a polymerization initiator including at least one of an alkali metal compound and an alkaline earth metal compound, and the compound [M] is a compound having a functional group F1, a functional group F2, and a functional group F3 and no active hydrogen; F1 is at least one functional group selected from the group consisting of a group "*¹-C(=E)-O-", group "*¹-C(=O)-NR²-", group "*¹-C≡N", group "*¹-C(=E)-R⁴", and group "*¹-C(=NR⁶)-R⁵" (wherein E is an oxygen atom or a sulfur atom; each of R² and R⁶ independently represents a C1 to C20 hydrocarbyl group; each of R⁴ and R⁵ independently represents a hydrogen atom, a tertiary alkyl group, group "-CR³¹=CR³²-R³³", and group "-C≡CR³⁴" (wherein each of R³¹, R³², R³³, and R³⁴ independently represents a hydrogen atom or a C1 to C20 hydrocarbyl group), or an aryl group, and "*¹" represents a bond to a tertiary carbon atom or a carbon atom forming a carbon-carbon unsaturated bond in a chain structure or a ring structure); F2 is at least one functional group selected from the group consisting of group "-C(R⁷)=N-" (wherein R⁷ represents a hydrogen atom or a C1 to C10 hydrocarbyl group, except for a group corresponding to the functional group F1), a protected primary amino group, a protected secondary amino group, and a tertiary amino group; F3 is at least one functional group selected from the group consisting of group "-Si(R⁸)₂(OR⁹)" and group "-Si (R¹⁰) ₂ (NR¹¹R¹²) " (wherein each of R⁸, R¹⁰, R¹¹, and R¹² independently represents a C1 to C20 hydrocarbyl group; and R⁹ represents a C1 to C20 hydrocarbyl group or a C3 to C30 monovalent group in which methylene groups forming a hydrocarbyl group are partially substituted with an oxygen atom).
[2] A modified conjugated diene-based polymer, which is a reaction product of a conjugated diene-based polymer having an active end with a compound [M]; the conjugated diene-based polymer having an active end is a polymer which is produced by polymerizing a monomer including a conjugated diene compound in the presence of a polymerization initiator including at least one of an alkali metal compound and an alkaline earth metal compound, and the compound [M] is a compound having the functional group F1, the functional group F2, and the functional group F3 shown above and no active hydrogen.
[3] A modified conjugated diene-based polymer represented by formula (3) or (4). 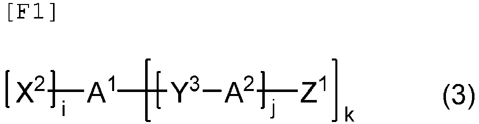 (In formula (3), X² is represented by any of the groups represented by formulas (5) to (8); Y³ represents a group represented by formula (9), a group represented by formula (10), group "-N(SiR¹³R¹⁴R¹⁵)-", or group "-NR¹⁶-"; each of R¹³, R¹⁴, R¹⁵, and R¹⁶ independently represents a C1 to C20 hydrocarbyl group; Z¹ represents group "-Si(R⁸)₂(OR⁹)" or group "-Si (R¹⁰) ₂ (NR¹¹R¹²) "; each of R⁸, R¹⁰, R¹¹, and R¹² independently represents a C1 to C20 hydrocarbyl group; R⁹ represents a C1 to C20 hydrocarbyl group or a C3 to C30 monovalent group in which methylene groups forming a hydrocarbyl group are partially substituted with an oxygen atom; A¹ represents a C1 to C20 (i+k)-valent hydrocarbon group or a C1 to C20 (i+k)-valent group having at least one atom selected from the group consisting of a nitrogen atom, an oxygen atom, and a sulfur atom, and no active hydrogen; A² represents a hydrocarbylene group; i, j, and k each are an integer of 1 to 10 and satisfy 2≤i+k≤10; and X², Y³, Z¹, and A² are identical to or different from one another, when a plurality of groups of each member are present.) 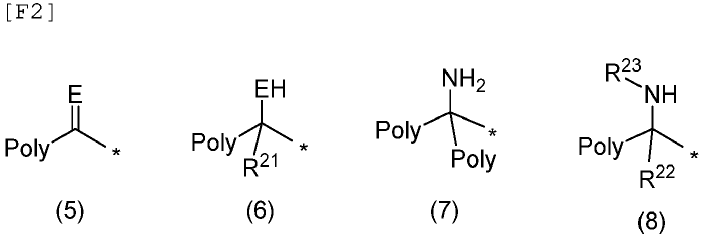 (In formulas (5) to (8), Poly represents a modified or unmodified conjugated diene-based polymer chain; E represents an oxygen atom or a sulfur atom; R²¹ represents a hydrogen atom, a tertiary alkyl group, group "-CR³¹=CR³²-R³³" , group "-C ≡CR³⁴" (each of R³¹, R³², R³³, and R³⁴ independently represents a hydrogen atom or a C1 to C20 hydrocarbyl group), an aryl group, or a modified or unmodified conjugated diene-based polymer chain; R²² represents a hydrogen atom, a tertiary alkyl group, group "-CR³¹=CR³²-R³³", group "-C≡CR³⁴" or an aryl group; R²³ represents a C1 to C20 hydrocarbyl group; and "*" represents a bond to a tertiary carbon atom or a carbon atom forming a carbon-carbon unsaturated bond in a chain structure or a ring structure, among the carbon atoms included in A¹.) 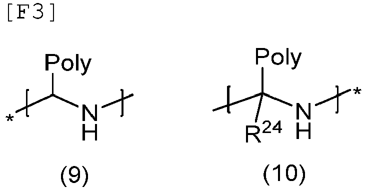 (In formulas (9) and (10), Poly represents a modified or unmodified conjugated diene-based polymer chain; R²⁴ represents a C1 to C20 hydrocarbyl group; and "*" represents a bond to A¹.) 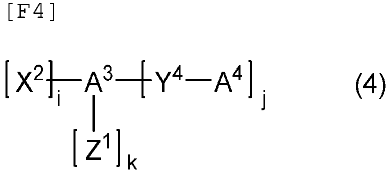 (In formula (4), X² and Z¹ have the same definitions as those in formula (3); "*" in formulas (5) to (8) represents a bond to a tertiary carbon atom or a carbon atom forming a carbon-carbon unsaturated bond in a chain structure or a ring structure, among the carbon atoms included in A³); Y⁴ has the same definition as that Y³ in formula (3); "*" in formulas (9) and (10) represents a bond to A³; A³ represents a C1 to C20 (i+j+k)-valent hydrocarbon group or a C1 to C20 (i+j+k)-valent group having at least one atom selected from the group consisting of a nitrogen atom, an oxygen atom, and a sulfur atom, and no active hydrogen; A⁴ represents a hydrocarbyl group; i, j, and k each are an integer of 1 to 10 and satisfy 2≤i+j+k≤10; and X², Y⁴, Z¹, and A⁴ are identical to or different from one another, when a plurality of groups of each member are present.)
[4] A polymer composition containing the modified conjugated diene-based polymer produced through the method of [1] above or the modified conjugated diene-based polymer of [2] or [3] above, and at least one species selected from the group consisting of silica and carbon black.
[5] A cross-linked product formed by cross-linking of the polymer composition of [4] above.
[6] A tire having a tread and a sidewall, wherein one or both of them is formed by use of the polymer composition of [4] above.
[7] A compound represented by formula (1) or (2). 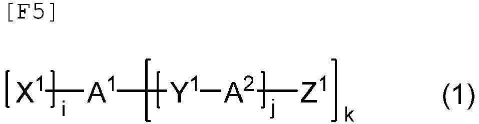 (In formula (1), X¹ represents group "*¹-C(=E)-OR¹", group "*¹-C(=O)-NR²R³", group "*¹-C≡N", group "*¹-C(=E)-R⁴", or group "*¹-C(=NR⁶)-R⁵"; E represents an oxygen atom or a sulfur atom; R¹ represents a C1 to C20 hydrocarbyl group or a C3 to C30 monovalent group in which methylene groups forming a hydrocarbyl group are partially substituted with an oxygen atom; each of R², R³, and R⁶ independently represents a C1 to C20 hydrocarbyl group; each of R⁴ and R⁵ independently represents a hydrogen atom, a tertiary alkyl group, group "-CR³¹=CR³²-R³³", group "-C≡CR³⁴" (wherein each of R³¹, R³², R³³, and R³⁴ independently represents a hydrogen atom or a C1 to C20 hydrocarbyl group), or an aryl group; "*¹" represents a bond to a tertiary carbon atom or a carbon atom forming a carbon-carbon unsaturated bond in a chain structure or a ring structure, among the carbon atoms included in A¹; Y¹ represents "*²-C(R⁷)=N-", group "-C(R⁷)=N-*²", group "-N(SiR¹³R¹⁴R¹⁵)- ", or group "-NR¹⁶-"; R⁷ represents a hydrogen atom or a C1 to C10 hydrocarbyl group; "*²" represents a bond to A¹; each of R¹³, R¹⁴, R¹⁵, and R¹⁶ independently represents a C1 to C20 hydrocarbyl group; Z¹ represents group "-Si(R⁸)₂(OR⁹)" or group "-Si(R¹⁰)₂(NR¹¹R¹²)"; each of R⁸, R¹⁰, R¹¹, and R¹² independently represents a C1 to C20 hydrocarbyl group; R⁹ represents a C1 to C20 hydrocarbyl group or a C3 to C30 monovalent group in which methylene groups forming a hydrocarbyl group are partially substituted with an oxygen atom; A¹ represents a C1 to C20 (i+k)-valent hydrocarbon group or a C1 to C20 (i+k)-valent group having at least one atom selected from the group consisting of a nitrogen atom, an oxygen atom, and a sulfur atom, and no active hydrogen; A² represents a hydrocarbylene group; i, j, and k each are an integer of 1 to 10 and satisfy 2≤i+k≤10; and X¹, Y¹, Z¹, and A² are identical to or different from one another, when a plurality of groups of each member are present.) 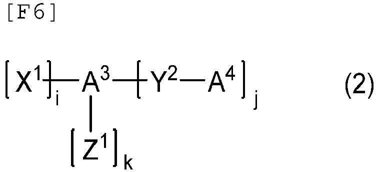
(In formula (2), X¹ and Z¹ have the same definitions as those in formula (1); "*¹" in X¹ represents a bond to a tertiary carbon atom or a carbon atom forming a carbon-carbon unsaturated bond in a chain structure or a ring structure, among the carbon atoms included in A³; Y² represents "*³-C(R⁷)=N-", group "-C(R⁷)=N-*³", group "-N (SiR¹³R¹⁴R¹⁵) -", or group "-NR¹⁶-"; R⁷, R¹³, R¹⁴, R¹⁵, and R¹⁶ have the same definitions as those of formula (1); "*³" represents a bond to A³; A³ represents a C1 to C20 (i+j+k)-valent hydrocarbon group or a C1 to C20 (i+j+k)-valent group having at least one atom selected from the group consisting of a nitrogen atom, an oxygen atom, and a sulfur atom, and no active hydrogen; A⁴ represents a hydrocarbyl group; i, j, and k each are an integer of 1 to 10 and satisfy 2≤i+j+k≤10; and X¹, Y⁴, Z¹, and A⁴ are identical to or different from one another, when a plurality of groups of each member are present.)

### Advantageous Effects of the Invention

According to the present disclosure, there can be provided a modified conjugated diene-based polymer which exhibits suitable rubber characteristics and which ensures consistent quality and has excellent shape stability.

### Modes for Carrying Out the Invention

The modified conjugated diene-based polymer of the present disclosure is a reaction product between a conjugated diene-based polymer having an active end and a compound [M]. The modified conjugated diene-based polymer is produced through the following polymerization step and modification step. Hereinafter, modes for carrying out the present disclosure will be described in detail.

### <Polymerization step>

In the polymerization step, a monomer including a conjugated diene compound is polymerized in the presence of an initiator containing at least one of an alkali metal compound and an alkaline earth metal compound, to thereby form a conjugated diene-based polymer having an active end. Examples of the conjugated diene compound involved in polymerization include 1,3-butadiene, isoprene, 2,3-dimethyl-1,3-butadiene, 1,3-pentadiene, 1,3-hexadiene, 1,3-heptadiene, 2-phenyl-1,3-butadiene, 3-methyl-1,3-pentadiene, and 2-chloro-1,3-butadiene. Among them, 1,3-butadiene, isoprene, and 2,3-dimethyl-1,3-butadiene are preferred.

The conjugated diene-based polymer may be a homopolymer of a conjugated diene compound. From the viewpoint of enhancing rubber strength, the conjugated diene-based polymer is preferably a copolymer formed of a conjugated diene compound and an aromatic vinyl compound. Examples of the aromatic vinyl compound involved in polymerization include styrene, 2-methylstyrene, 3-methylstyrene, 4-methylstyrene, α-methylstyrene, 2,4-dimethylstyrene, 2,4-diisopropylstyrene, 4-t-butylstyrene, 5-t-butyl-2-methylstyrene, vinylethylbenzene, divinylbenzene, trivinylbenzene, divinylnaphthalene, t-buotxystyrene, vinylbenzyldimethylamine, (4-vinylbenzyl) dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinylpyridine, diphenylethylene, and tert-amino group-containing diphenylethylene (e.g., 1-(4-N,N-dimethylaminophenyl)-1-phenylethylene). Among these aromatic vinyl compounds, styrene and α-methylstyrene are preferred.

When the conjugated diene-based polymer is a copolymer of a conjugated diene compound and an aromatic vinyl compound, the copolymer is preferably formed of monomers including, among others, 1,3-butadiene and styrene, from the viewpoint of high living performance in anionic polymerization. From the viewpoint of successfully improving the balance in hysteresis loss at low temperature and high temperature, the above copolymer preferably includes a random copolymerization segment having an irregular distribution of the conjugated diene compound and the aromatic vinyl compound. The aforementioned copolymer may further include a block segment formed of the conjugated diene compound or the aromatic vinyl compound.

When the conjugated diene-based polymer is a copolymer of a conjugated diene compound and an aromatic vinyl compound, the relative amount of the employed aromatic vinyl compound is preferably adjusted to 3 to 55 mass% with respect to the total amount of the conjugated diene compound and the aromatic vinyl compound involved in polymerization, more preferably 5 to 50 mass%, from the viewpoint of achieving well balance between low hysteresis loss performance and wet skid resistance of the yielded cross-linked product. The relative amount of the structural unit derived from the aromatic vinyl compound in the polymer is determined by means of a ¹H-NMR apparatus. The conjugated diene compound or the aromatic vinyl compound may be used singly or in combination of two or more species.

In the above polymerization, a compound other than the conjugated diene compound and the aromatic vinyl compound (hereinafter may also be referred to as an "additional monomer") may be used as a monomer. Examples of the additional monomer include acrylonitrile, methyl (meth)acrylate, and ethyl (meth)acrylate. The amount of the additional monomer(s) used in polymerization is preferably 10 mass% or less, more preferably 5 mass% or less, with respect to the entire amount of the monomers involved in polymerization.

The polymerization method which is employed may be any of solution polymerization, gas phase polymerization, and bulk polymerization. Among the polymerization methods, solution polymerization is particularly preferably employed. Also, the polymerization method may be performed in a batch manner or in a continuous manner. When solution polymerization is employed, one specific procedure includes polymerization of monomers including a conjugated diene compound in a solvent (preferably an organic solvent) in the presence of a polymerization initiator and an optional vinyl content-modifying agent (hereinafter may also be referred to as a "randomizer").

As the polymerization initiator, at least one of an alkali metal compound and an alkaline earth metal compound is used. Specific examples of the alkali metal compound include alkyllithium, 1,4-dilitiobutane, phenyllithium, stilbenelithium, naphthyllithium, 1,3-bis(1-lithio-1,3-dimethylpentyl)benzene, 1,3-phenylenebis(3-methyl-1-phenylpentylidene)dilithium, naphthylsodium, naphthylpotassium, ethoxypotassium, di-n-butylmagnesium, din-hexylmagnesium, ethoxypotassium, and calcium stearate. Examples of the alkyllithium include methyllithium, ethyllithium, n-propyllithium, n-butyllithium, sec-butyllithium, and t-butyllithium. Among them, the polymerization initiator is preferably a lithium compound.

In the aforementioned polymerization reaction, there may be used, as a polymerization initiator, a metal amide compound which is yielded by mixing at least one of an alkali metal compound and an alkaline earth metal compound with a compound having a functional group which covalently bonds or interacts with silica (hereinafter may also be referred to as an "initiation end-modifying agent"). By polymerizing a monomer(s) in the presence of such a metal amide compound, a functional group derived from the initiation end-modifying agent can be incorporated into a polymerization initiating end of the conjugated diene-based polymer.

As used herein, the term "a functional group that can interact with silica" refers to a group containing an element which interacts with silica (e.g., nitrogen, sulfur, phosphorus, and oxygen). The term "interaction" refers to generation of intermolecular force which is weaker than a covalent bond (e.g., intermolecular electromagnetic force such as ion-dipole interaction, dipole-dipole interaction, hydrogen bond, or Van der Waals force).

The initiation end-modifying agent is preferably a nitrogen-containing compound such as a secondary amine compound. Specific examples of the nitrogen-containing compound include chain or cyclic secondary amine compounds such as dimethylamine, diethylamine, dipropylamine, dibutylamine, dodecamethylenimine, N,N'-dimethyl-N'-trimethylsilyl-1,6-diaminohexane, piperidine, pyrrolidine, hexamethylenimine, heptamethylenimine, dicyclohexylamine, N-methylbenzylamine, di-(2-ethylhexyl)amine, diallylamine, morpholine, N-(trimethylsilyl)piperazine, N-(tert-butyldimethylsilyl)-piperazine, 1,3-ditrimethylsilyl-1,3,5-triazinane, N-trimethylsilylpiperazine, 1,3,3-trimethyl-6-azabicyclo[3.2.1]octane, and 1-propyl-3-azabicyclo[3.2.2]nonane.

When polymerization is conducted in the presence of a metal amide compound, at least one of an alkali metal compound and an alkaline earth metal compound may be mixed with a secondary amine compound in advance, and the thus-prepared mixture may be added to the polymerization system for conducting polymerization. Alternatively, both at least one of an alkali metal compound and an alkaline earth metal compound and a secondary amine compound may be added separately or simultaneously to the polymerization system, and the two parts may be mixed in the polymerization system, to thereby conduct polymerization. The above-mentioned two ways are encompassed in such an embodiment that "monomers including a conjugated diene compound in the presence of a metal amide compound which has been prepared by mixing at least one of an alkali metal compound and an alkaline earth metal compound with an initiation end-modifying agent."

The amount of polymerization initiator (the total amount, when two or more species are used) is preferably 0.01 to 20 mmol, more preferably 0.05 to 15 mmol, with respect to 100 g of the monomer(s) involved in synthesis of the modified conjugated diene-based polymer.

The randomizer (hereinafter may also be referred to as a "vinyl content modulating agent") may be used for the purpose of adjusting the vinyl bond content (i.e., a percent amount of vinyl bonds in the polymer) and other reasons. Examples of the randomizer include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, and tetramethylethylenediamine. These randomizers may be used singly or in combination of two or more species.

As the organic solvent employed in polymerization, an organic solvent which is not involved in polymerization reaction is preferably used. Specific examples of the organic solvent employed in polymerization include an aliphatic hydrocarbon, an alicyclic hydrocarbon, and an aromatic hydrocarbon. Among them, a C3 to C8 hydrocarbon is preferred. Specific examples include propane, n-butane, isobutane, n-pentane, isopentane, n-hexane, cyclohexane, propene, 1-butene, isobutene, trans-2-butene, cis-2-butene, 1-hexene, 2-hexene, benzene, toluene, xylene, ethylbenzene, heptane, cyclopentane, methylcyclopentane, methylcyclohexane, 1-pentene, 2-pentene, and cyclohexene. These organic solvents may be used singly or in combination of two or more species.

When solution polymerization is conducted, the monomer concentration of the reaction solvent is preferably 5 to 50 mass%, more preferably 10 to 30 mass%, from the viewpoint of maintaining the balance between productivity and facility in controlling polymerization. The temperature of polymerization reaction is preferably -20°C to 150°C, more preferably 0 to 120°C. Also, the polymerization reaction is preferably conducted at such a pressure sufficiently maintaining the monomers substantially in a liquid phase. Such pressure can be achieved through, for example, a method including pressurizing a reactor with a gas which is not involved in polymerization reaction.

Through such polymerization reaction, a conjugated diene-based polymer having an active end can be yielded. The weight average molecular weight (Mw) (as reduced to polystyrene) of the thus-produced conjugated diene-based polymer contained, which is determined through gel permeation chromatography (GPC), is preferably 5.0×10⁴ to 1.0×10⁶. When Mw is 5.0×10⁴ or more, tensile strength, low heat generation, and wear resistance of the cross-linked product can be satisfactorily secured. When Mw is 1.0×10⁶ or less, processability of a polymer composition containing the modified conjugated diene-based polymer can be enhanced. Both cases are preferred. More preferably, Mw is 8.0×10⁴ to 8.0×10⁵, still more preferably 1.0×10⁵ to 5.0×10⁵. In the present specification, Mw of the conjugated diene-based polymer is a weight average molecular weight calculated from all the peaks in a GPC curve (i.e., total weight average molecular weight).

The molecular weight distribution (Mw/Mn); i.e., a ratio of weight average molecular weight (Mw) to number average molecular weight (Mn), of the conjugated diene-based polymer, the molecular weights being determined through GPC, is preferably 4.0 or less, more preferably 3.5 or less.

The vinyl bond content of the conjugated diene-based polymer having an active end is preferably 15 to 70 mol%. When the vinyl bond content is 15 mol% or higher, grip performance can be enhanced, whereas when the vinyl bond content is 70 mol% or lower, a drop in wear resistance of the produced vulcanized rubber can be suppressed, therefore these cases are preferred. The vinyl bond content is more preferably 18 mol% or higher, still more preferably 20 mol% or higher. Also, the vinyl bond content is more preferably 68 mol% or lower, still more preferably 65 mol% or lower. As used herein, the "vinyl bond content" refers to a ratio of the structural units having a 1,2-bond to all the butadiene structural units in the conjugated diene-based polymer and is a value determined through ¹H-NMR.

### <Modification step>

In the modification step, the active end of the conjugated diene-based polymer obtained through the aforementioned polymerization step is reacted with the compound [M]. By use of the compound [M] as an end-modifying agent, a modified conjugated diene-based polymer having ≥2 branches in the polymer chain and a group which can form a covalent bond or interact with silica can be produced.

The compound [M] is a compound having the below-described functional groups F1, F2, and F3 and no active hydrogen.

F1: at least one functional group selected from the group consisting of a group "*¹-C(=E)-O-", group "*¹-C(=O)-NR²-", group "*¹-C≡N", group "*¹-C(=E)-R⁴", or group "*¹-C(=NR⁶)-R⁵" (wherein E is an oxygen atom or a sulfur atom; each of R² and R⁶ independently represents a C1 to C20 hydrocarbyl group; each of R⁴ and R⁵ independently represents a hydrogen atom, a tertiary alkyl group, group "-CR³¹=CR³²-R³³", and group "-C≡CR³⁴" (wherein each of R³¹, R³², R³³, and R³⁴ independently represents a hydrogen atom or a C1 to C20 hydrocarbyl group), or an aryl group, and "*¹" represents a bond to a tertiary carbon atom or a carbon atom forming a carbon-carbon unsaturated bond in a chain structure or a ring structure).

F2: at least one functional group selected from the group consisting of group "-C(R⁷)=N-" (wherein R⁷ represents a hydrogen atom or a C1 to C10 hydrocarbyl group, except for a group corresponding to the functional group F1), a protected primary amino group, a protected secondary amino group, and a tertiary amino group.

F3: at least one functional group selected from the group consisting of group "-Si(R⁸)₂(OR⁹)" and group "-Si (R¹⁰) ₂ (NR¹¹R¹²) " (wherein each of R⁸, R¹⁰, R¹¹, and R¹² independently represents a C1 to C20 hydrocarbyl group; and R⁹ represents a C1 to C20 hydrocarbyl group or a C3 to C30 monovalent group in which methylene groups forming a hydrocarbyl group are partially substituted with an oxygen atom).

As used herein, the term "active hydrogen" refers to a hydrogen atom bonding to an atom other than a carbon atom, and preferably having a bonding energy lower than that of a C-H bond of polymethylene. Hereinafter, the structurers and other features of the functional groups F1 to F3 and the compound [M] will be described in detail.

### (Functional group F1)

The functional group F1 has a C-hetero atom multiple bond. The carbon atoms forming the C-hetero atom multiple bond in the functional group F1 are bonded to a tertiary carbon atom or a carbon atom which forms a carbon-carbon unsaturated bond in a chain structure or a ring structure. The tertiary carbon atom is a carbon atom which is bonded to three adjacent carbon atoms via a single bond. No hydrogen atom is bonded to the tertiary carbon atom.

Even in the case where a carbon atom forming the carbon-hetero atom multiple bond is adjacent to a carbon atom to which two or more hydrogen atoms are bonded (e.g., a carbon atom in -CH₂- or -CH₃) or a carbon atom to which one hydrogen atom is bonded (e.g., a carbon atom in -CH(CH₃)- or -CH(CH₃)₂), when the carbon atom is adjacent to a carbon atom to which another group is bonded via a single bond, the hydrogen atom (i.e., α-hydrogen) bonded to the carbon atom tends to have an acidity higher than that of a hydrogen atom included in a polymethylene group. In such a case, conceivably, the α-hydrogen has high reactivity with an active end of the conjugated diene-based polymer, which may possibly cause deactivate the active end. In contrast, in the compound [M], the α-carbon of the functional group F1 contained in the compound [M] is a carbon atom forming a carbon-carbon unsaturated bond in a chain structure or a ring structure, or a tertiary carbon atom, whereby it is presumed that deactivation of the active end of the conjugated diene-based polymer is suppressed and the suppression influenced the performance improvement of the cross-linked product yielded by use of the modified conjugated diene-based polymer of the present disclosure.

Examples of the C1 to C20 hydrocarbyl group of R² and R⁶ include a C1 to C20 alkyl group, a C3 to C20 cycloalkyl group, a C2 to C20 alkenyl group, and a C6 to C20 aryl group. Each of R² and R⁶ is preferably a C1 to C20 alkyl group.

Examples of the tertiary alkyl group of R⁴ and R⁵ include a C4 to C10 tertiary alkyl group. In group "-CR³¹=CR³²-R³³" and group "-C≡CR³⁴", examples of the C1 to C20 hydrocarbyl group of R³¹, R³², R³³, and R³⁴ include a C1 to C20 alkyl group, a C3 to C20 cycloalkyl group, a C2 to C20 alkenyl group, and a C6 to C20 aryl group. Examples of the aryl group include a C6 to C20 aryl group. Among them, R⁴ and R⁵ are preferably a hydrogen atom, a tert-butyl group, a vinyl group, or a phenyl group, with a hydrogen atom being more preferred.

The compound [M] may contain only one functional group F1 or two or more of them. The number of the functional group(s) F1 in one molecule of the compound [M] is preferably 1 to 6, more preferably 1 to 3.

The functional group F1 bonds to a tertiary carbon atom or a carbon atom forming a carbon-carbon unsaturated bond in a chain structure or a ring structure included in the compound [M], by the mediation of a carbon atom forming a carbon-heteroatom multiple bond. From the viewpoints of the effect of enhancing consistent quality and rubber shape stability and achieving further excellent wear resistance of the produced cross-linked product, the bond represented by "*¹" is preferably, among others, a bond bonding to a carbon atom forming a carbon-carbon unsaturated bond in a chain structure or a ring structure. Examples of the carbon atom forming a carbon-carbon unsaturated bond in a chain structure include a carbon atom forming a vinylene group and a carbon atom forming an ethynylene group. Examples of the carbon atom forming a carbon-carbon unsaturated bond in a ring structure include a carbon atom forming a carbon-carbon unsaturated bond included in an aromatic ring. The aromatic ring may be an aromatic hydrocarbon ring or an aromatic heterocycle. Examples of the aromatic hydrocarbon ring include a benzene ring, a naphthalene ring, and an anthracene ring. Examples of the aromatic heterocycle include a single ring and a condensed ring of pyridine, pyrimidine, pyrazine, quinoline, naththalidine, furan, and thiophene. Among them, the bond represented by "*¹" is particularly preferably a bond bonding to a carbon atom forming an aromatic ring.

### (Functional group F2)

The functional group F2 is a nitrogen-containing functional group. By using a modified conjugated diene-based polymer end-modified with the compound [M] having the functional group F2, dispersibility of silica can conceivably be enhanced by virtue of the functional group F2 present at a polymer end.

In group "-C(R⁷)=N-", the C1 to C10 hydrocarbyl group of R⁷ include a C1 to C10 alkyl group, a C3 to C10 cycloalkyl group, a C2 to C10 alkenyl group, a C2 to C10 alkynyl group, and a C6 to C10 aryl group. From the viewpoint of enhancing the performance of a cross-linked product formed by use of the modified conjugated diene-based polymer, R⁷ is preferably a hydrogen atom, a tertiary alkyl group, group "-CR³¹=CR³²-R³³", group "-C≡CR³⁴", or an aryl group, more preferably a hydrogen atom, a tert-butyl group, or a phenyl group, still more preferably a hydrogen atom.

When the functional group F2 is group "-C(R⁷)=N-", a carbon atom forming the carbon-heteroatom multiple bond (i.e., the carbon atom to which R⁷ and a nitrogen atom are bonded) is preferably bonded to a tertiary carbon atom or a carbon atom forming a carbon-carbon unsaturated bond in a chain structure or a ring structure. In that case, the performance of a cross-linked product formed by use of the modified conjugated diene-based polymer can be enhanced, which is preferred. Particularly, a carbon atom forming a carbon-heteroatom multiple bond is preferably bonded to a carbon atom forming a carbon-carbon unsaturated bond in a chain structure or a ring structure, more preferably to a carbon atom forming a carbon-carbon unsaturated bond in a ring structure.

Examples of the protected primary amino group include group "-NR¹⁷R¹⁸" (wherein each of R¹⁷ and R¹⁸ is independently a functional group which converts the functional group F2 to a functional group inert to a polymerization active end). Examples of the protected secondary amino group include group "-NR¹⁷-". Each of R¹⁷ and R¹⁸ is preferably a silyl-based functional group, more preferably group "-SiR²⁰R²¹R²²" (wherein each of R²⁰, R²¹, and R²² is independently a C1 to C20 hydrocarbyl group). Specific examples of the C1 to C20 hydrocarbyl group of R²⁰, R²¹, or R²² include the same as described in relation to R², R⁴, and R⁶. In particular, R²⁰, R²¹, and R²² are preferably a C1 to C20 alkyl group, more preferably a C1 to C10 alkyl group.

Examples of the tertiary amino group include group "*⁴-NR²³-*⁵" and group "*⁴-NR²³R²⁴" (wherein each of R²³ and R²⁴ independently represents a C1 to C20 hydrocarbyl group, and "*⁴" and "*⁵" each represent a bond to a hydrocarbon group). Specific examples of the C1 to C20 hydrocarbyl group of R²³ or R²⁴ include the same as described in relation to R², R⁴, and R⁶. In particular, R²³ and R²⁴ are preferably a C1 to C20 alkyl group, more preferably a C1 to C10 alkyl group.

From the viewpoints of enhancing dispersibility of silica and yielding a cross-linked product having good fuel consumption performance, the functional group F2 is preferably, among the aforementioned groups, at least one member selected from the group consisting of group "-C(R⁷)=N-", a protected secondary amino group, and a tertiary amino group, with at least one member selected from the group consisting of group "-C(R⁷)=N-" and a protected secondary amino group being more preferred.

The compound [M] may have only one functional group F2 or two or more of them. The number of the functional group(s) F2 in one molecule of the compound [M] is preferably 1 to 6, more preferably 1 to 3.

### (Functional group F3)

The functional group F3 is a monovalent, silicon-containing functional group having a structure in which only one hydrocarbyloxy or dihydrocarbylamino group is bonded a silicon atom. Hereinafter, group "-Si(R⁸)₂(OR⁹)" may also be referred to as "mono(hydrocarbyloxy)silyl group", and group "-Si(R¹⁰)₂(NR¹¹R¹²)" may also be referred to as "mono(dihydrocarbylamino)silyl group". Since the number of the hydrocarbyloxy group or dihydrocarbylamino group bonded to the silicon atom of the functional group F3 is 1, conceivably, dehydration condensation between moieties originating from the end-modifying agent is suppressed between molecules of the modified conjugated diene-based polymer, to thereby suppress deterioration of the modified conjugated diene-based polymer over time.

Specific examples of the C1 to C20 hydrocarbyl group of R⁸, R⁹, R¹⁰, R¹¹, or R¹² include the same as described in relation to R², R⁴, and R⁶. In particular, the C1 to C20 hydrocarbyl group is preferably a C1 to C20 alkyl group, more preferably a C1 to C10 alkyl group.

When R⁹ is a C3 to C30 monovalent group in which methylene groups forming a hydrocarbyl group are partially substituted with an oxygen atom, examples of R⁹ include a C3 to C30 alkoxyalkyl group, an alkoxypolyalkylene glycol group, a C7 to C30 aryloxyalkyl group, an aryloxypolyalkylene glycol group. Of these, a C3 to C30 alkoxypolyalkylene glycol group or an alkoxyalkyl group are preferred, with group "-(CH₂CH₂O)ₙ-CₘH₂ₘ₊₁" (wherein n is an integer of 1 to 10, and m is 1 or 2) being more preferred.

Among these groups, R⁹ is preferably a C1 to C20 hydrocarbyl group, a C3 to C30 alkoxypolyalkylene glycol group, or an alkoxyalkyl group, more preferably a C1 to C20 alkyl group, still more preferably a C1 to C10 alkyl group.

From the viewpoint of fuel efficiency of the cross-linked product obtained by use of the modified conjugated diene-based polymer, the functional group F3 is preferably bonded to a carbon atom. The compound [M] may have one or two or more of them. The number of functional groups F3 present in one molecule of the compound [M] is preferably 1 to 6, more preferably 1 to 3. The total number of the functional group(s) F1, functional group(s) F2, and functional group(s) F3 is preferably 3 to 10, more preferably 3 to 6.

Particularly, the compound [M] is preferably at least one species selected from the group consisting of a compound represented by formula (1) and a compound represented by formula (2). 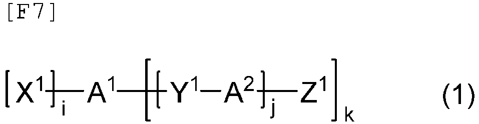 (In formula (1), X¹ represents group "*¹-C(=E)-OR¹", group "*¹-C(=O)-NR²R³", group "*¹-C≡N", group "*¹-C(=E)-R⁴", or group "*¹-C(=NR⁶)-R⁵"; E represents an oxygen atom or a sulfur atom; R¹ represents a C1 to C20 hydrocarbyl group or a C3 to C30 monovalent group in which methylene groups forming a hydrocarbyl group are partially substituted with an oxygen atom; each of R², R³, and R⁶ independently represents a C1 to C20 hydrocarbyl group; each of R⁴ and R⁵ independently represents a hydrogen atom, a tertiary alkyl group, group "-CR³¹=CR³²-R³³", group "-C≡CR³⁴" (wherein each of R³¹, R³², R³³, and R³⁴ independently represents a hydrogen atom or a C1 to C20 hydrocarbyl group), or an aryl group; "*¹" represents a bond to a tertiary carbon atom or a carbon atom forming a carbon-carbon unsaturated bond in a chain structure or a ring structure, the carbon atoms included in A¹); Y¹ represents "*²-C(R⁷)=N-", group "-C(R⁷)=N-*²", group "-N (SiR¹³R¹⁴R¹⁵) - ", or group "-NR¹⁶-"; R⁷ represents a hydrogen atom or a C1 to C10 hydrocarbyl group; "*²" represents a bond to A¹; each of R¹³, R¹⁴, R¹⁵, and R¹⁶ independently represents a C1 to C20 hydrocarbyl group; Z¹ represents group "-Si(R⁸)₂(OR⁹)" or group "-Si(R¹⁰)₂(NR¹¹R¹²)"; each of R⁸, R¹⁰, R¹¹, and R¹² independently represents a C1 to C20 hydrocarbyl group; R⁹ represents a C1 to C20 hydrocarbyl group or a C3 to C30 monovalent group in which methylene groups forming a hydrocarbyl group are partially substituted with an oxygen atom); A¹ represents a C1 to C20 (i+k)-valent hydrocarbon group or a C1 to C20 (i+k)-valent group having at least one atom selected from the group consisting of a nitrogen atom, an oxygen atom, and a sulfur atom, and no active hydrogen; A² represents a hydrocarbylene group; i, j, and k each are an integer of 1 to 10 and satisfy 2≤i+k≤10; and X¹, Y¹, Z¹, and A² are identical to or different from one another, when a plurality of groups of each member are present.) 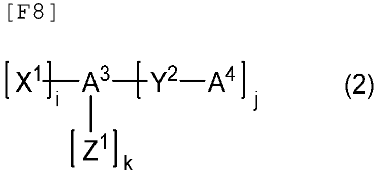 (In formula (2), X¹ and Z¹ have the same definitions as those in formula (1); "*¹" in X¹ represents a bond to a tertiary carbon atom or a carbon atom forming a carbon-carbon unsaturated bond in a chain structure or a ring structure, the carbon atoms included in A³); Y² represents "*³-C(R⁷)=N-", group "-C(R⁷)=N-*³", group "-N (SiR¹³R¹⁴R¹⁵) - ", or group "-NR¹⁶-"; R⁷, R¹³, R¹⁴, R¹⁵, and R¹⁶ have the same definitions as those of formula (1); "*³" represents a bond to A³; A³ represents a C1 to C20 (i+j+k)-valent hydrocarbon group or a C1 to C20 (i+j+k)-valent group having at least one atom selected from the group consisting of a nitrogen atom, an oxygen atom, and a sulfur atom, and no active hydrogen; A⁴ represents a hydrocarbyl group; i, j, and k each are an integer of 1 to 10 and satisfy 2≤i+j+k≤10; and X¹, Y², Z¹, and A⁴ are identical to or different from one another, when a plurality of groups of each member are present).

In X¹ of the above formulas (1) and (2), examples of the C1 to C20 hydrocarbyl group or the C3 to C30 monovalent group in which methylene groups forming a hydrocarbyl group are partially substituted with an oxygen atom, which corresponds to R¹, include the same as described in relation to R⁹ of the functional group F3. R¹ is preferably a C1 to C20 hydrocarbyl group, a C3 to C30 alkoxypolyalkylene glycol group, or an alkoxyalkyl group, more preferably a C1 to C20 hydrocarbyl group or group "-(CH₂CH₂O)ₙ-CₘH₂ₘ₊₁" (wherein n is an integer of 1 to 10, and m is 1 or 2). Specific examples of R³ and examples of preferred groups R³ include the same as mentioned in relation to R².

In the above formulas (1) and (2), X¹ is a movovalent group corresponding to the functional group F1; Y¹ is a divalent group corresponding to the functional group F2; and Z¹ is a monovalent group corresponding to the functional group F3. The aforementioned definitions also apply to the functional group F1, functional group F2, and functional group F3.

In the above formula (1), specific examples of the (i+k)-valent hydrocarbon group of A¹ include a group which is formed by removing (i+k) hydrogen atoms from a C1 to C20 chain hydrocarbon, a C3 to 20 alicyclic hydrocarbon, or a C6 to C20 aromatic hydrocarbon. When A¹ is an (i+k)-valent hydrocarbon group, A¹ is preferably a group which is formed by removing (i+k) hydrogen atoms from a ring moiety of an aromatic hydrocarbon (i.e., an aromatic cyclic group), from the viewpoint of a high effect of improving wear resistance of a cross-linked product produced by use of the modified conjugated diene-based polymer. Specific examples of the aromatic hydrocarbon include a ring structure represented by formula (11) and a polycyclic structure formed by linking of two or more ring structure units (e.g., a biphenyl group).

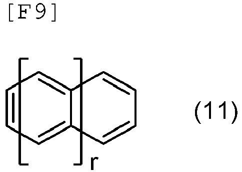

### (In formula (11), r is an integer of 0 to 2.)

When A¹ is a C1 to C20 (i+k)-valent group having at least one atom selected from the group consisting of a nitrogen atom, an oxygen atom, and a sulfur atom, and no active hydrogen, specific examples of preferred such groups include an (i+k)-valent heterocyclic group and an (i+k)-valent group having a tertiary amine moiety. Such a heterocyclic group is preferably a conjugated system, and examples include a single ring or a condensed ring such as pyridine, pyrimidine, pyrazine, quinoline, naphthyridine, furan, and thiophene; and a group (i.e., an aromatic cyclic group) which is formed by removing (i+k) hydrogen atoms from a ring moiety of a structure formed by linking a plurality (one or more) of the single ring or a condensed ring. The "(i+k)" is preferably 2 to 6, from the viewpoint of processability of the polymer composition.

From the viewpoints of the effect of enhancing consistent quality and rubber shape stability and improving wear resistance of a cross-linked product obtained by use of the modified conjugated diene-based polymer, A¹ is preferably an (i+k)-valent aromatic ring group.

When A² is a hydrocarbylene group, specific examples of the hydrocarbylene group include a C1 to C20 alkanediyl group, a C3 to C20 cycloalkylene group, and a C6 to C20 arylene group. A² is preferably, among others, a C1 to C20 alkanediyl group. The "j" is preferably 1 to 5, more preferably 1 to 3.

In the above formula (2), when A³ is an (i+j+k)-valent hydrocarbon group, specific examples thereof include a group which is formed by removing (i+j+k) hydrogen atoms from a C1 to C20 chain hydrocarbon, a C3 to 20 alicyclic hydrocarbon, or a C6 to C20 aromatic hydrocarbon. Among them, a group which is formed by removing (i+j+k) hydrogen atoms from a ring moiety of an aromatic hydrocarbon (i.e., an aromatic cyclic group) is preferred, from the viewpoint of a high effect of improving wear resistance of a cross-linked product produced by use of the modified conjugated diene-based polymer. Specific examples of the aromatic hydrocarbon include a ring structure represented by formula (11), and a polycyclic structure (e.g., a biphenyl group) formed by linking two or more ring structure units.

When A³ is a C1 to C20 (i+j+k)-valent group having at least one atom selected from the group consisting of a nitrogen atom, an oxygen atom, and a sulfur atom, and no active hydrogen, specific examples such groups include an (i+j+k)-valent heterocyclic group and an (i+j+k)-valent group having a tertiary amine moiety. Such a heterocyclic group is preferably a conjugated system, and examples include a single ring or a condensed ring such as pyridine, pyrimidine, pyrazine, quinoline, naphthyridine, furan, and thiophene; and a group (i.e., an aromatic cyclic group) which is formed by removing (i+j+k) hydrogen atoms from a ring moiety of a structure formed by linking a plurality (one or more) of such single rings or such condensed rings (i.e., an aromatic cyclic group). The "(i+j+k)" is preferably 2 to 6, from the viewpoint of processability of the polymer composition.

Specific examples of the hydrocarbyl group of A⁴ include the same as described in relation to R², R⁴, and R⁶ in the functional group F1. A⁴ is preferably, among others, a C6 to C20 aryl group.

From the viewpoints of the effect of enhancing consistent quality and rubber shape stability and improving wear resistance of a cross-linked product obtained by use of the modified conjugated diene-based polymer, A³ is preferably, among others, an (i+j+k)-valent aromatic ring group.

Specific examples of the compound [M] include compounds represented by formulas (M-1) to (M-33) and the like. These compounds [M] may be used singly or in combination of two or more species. In the aforementioned formulas, Me represents a methyl group, Et an ethyl group, TMS a trimethylsilyl group, and TBS a tert-butyldimethylsilyl group.

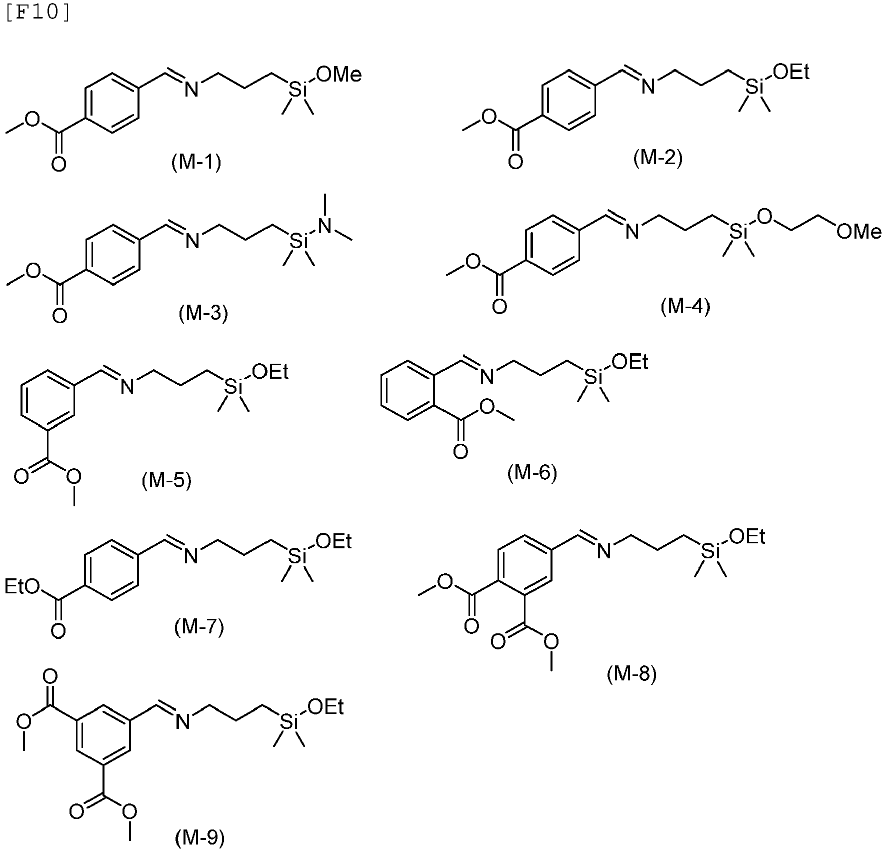

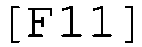

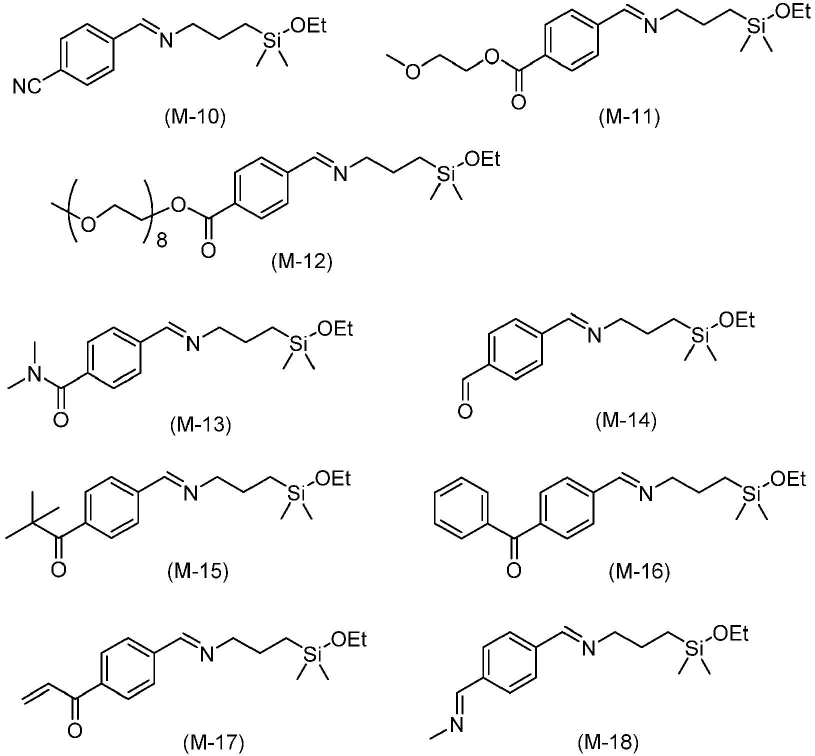

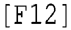

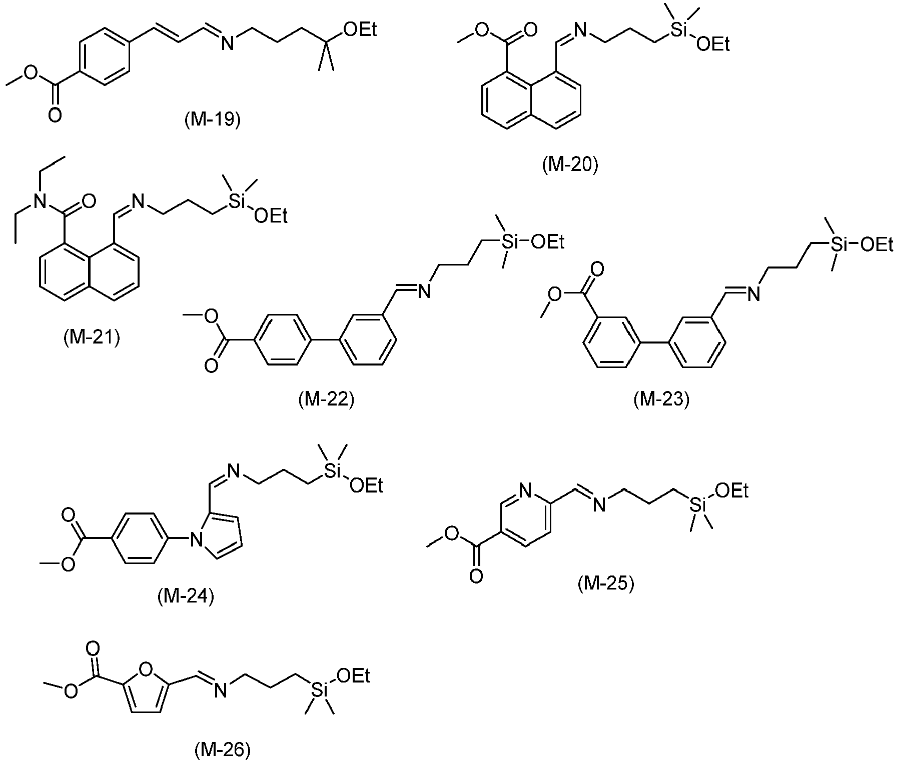

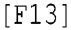

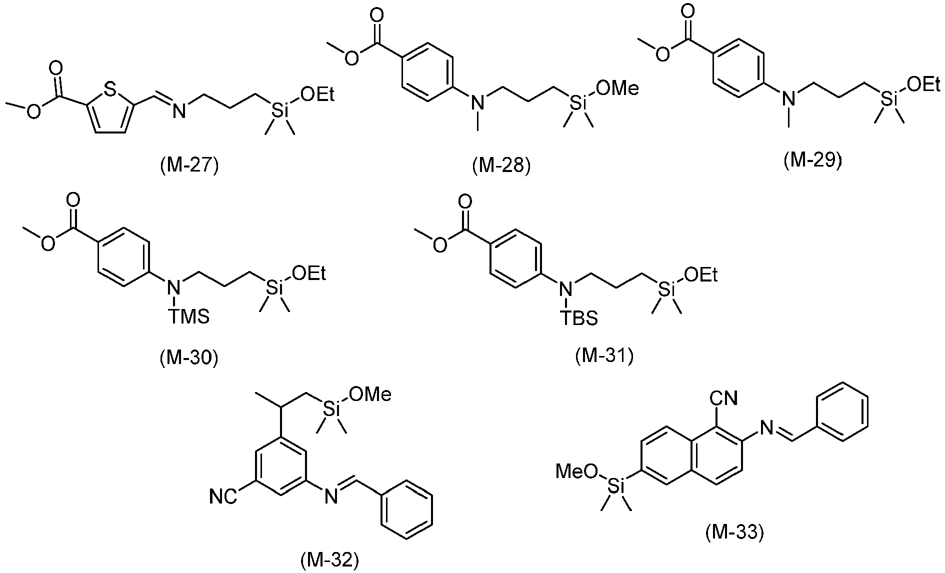

The compound [M] may be synthesized through an appropriate combination of techniques generally known in organic chemistry. Specific examples of the procedure of synthesis include reacting a compound represented by "H₂N-A²-Z¹" with a compound represented by " (X¹)ᵢ-A¹-(CR⁷=O)ₖ," to thereby form a compound represented by (X¹)ᵢ-A¹-(CR⁷=N-A²-Z¹)ₖ" and reacting a compound represented by "(X¹)ᵢ-A¹-(NH-R¹⁶)ₖ" with a compound represented by "X⁵-A²-Z¹" (X⁵ represents a halogen atom), to thereby form a compound represented by "(X¹)ᵢ-A¹-(NR¹⁶-A²-Z¹)ₖ".

In an alternative procedure, a styrene derivative having a cyano group and a primary amino group in the molecule thereof is reacted with a compound having an aldehyde group, to thereby form a corresponding imino compound, and the imino compound is reacted with dialkyl(hydrocarbyloxy)hydrosilane, to thereby yield a compound represented by formula (M-30). In a still alternative procedure, a naphthalene derivative having a cyano group, a primary amino group, and a halogen group in the molecule thereof is reacted with a compound having an aldehyde group, to thereby form a corresponding imino compound, and the imino compound is reacted with dialkyldi(hydrocarbyloxy)silane in the presence of a palladium catalyst, to thereby yield a compound represented by formula (M-31).

If required, any of the aforementioned reactions of synthesis of the compound [M] may be performed in an appropriate organic solvent in the presence of a catalyst or a base or both. However, the method of synthesizing the compound [M] is not limited to the aforementioned procedures.

The reaction between the conjugated diene-based polymer having an active end and the compound [M] is preferably conducted in the way of solution reaction. From the viewpoint of sufficiently proceeding the modification reaction, the amount of the compound [M] used (the total amount, when two or more species are used), is preferably 0.01 mol% or more, with respect to 1 mol of metal atoms which is present in the polymerization initiator and which is involved in polymerization, more preferably 0.05 mol% or more. In order to prevent excessive addition, the compound [M] is preferably adjusted to less than 2.0 mol, with respect to 1 mol of metal atoms which is present in the polymerization initiator and which is involved in polymerization, more preferably less than 0.1 mol, still more preferably less than 0.7 mol, yet more preferably less than 0.5 mol.

The temperature of the modification reaction is generally the same as employed in polymerization reaction, and the temperature is preferably adjusted -20°C to 150°C, more preferably 0 to 120°C. When the reaction temperature is lower, the viscosity of the modified polymer tends to rise, whereas when the reaction temperature is higher, a polymerization active end tends to be deactivated. The reaction time is preferably 1 minute to 5 hours, more preferably 2 minutes to 1 hour.

In reaction of the conjugated diene-based polymer having an active end with the compound [M], an additional compound other than the compound [M] (hereinafter may also be referred to as an optional modifying agent or a coupling agent) may be reacted with the conjugated diene-based polymer having an active end. No particular limitation is imposed on the optional modifying agent or the coupling agent, so long as the agent is a compound that can react with the active end of the conjugated diene-based polymer formed through the above polymerization procedure. As the optional modifying agent or the coupling agent used to the conjugated diene-based polymer, a known compound (e.g., a nitrogen-containing alkoxysilane compound or a glycidyl group-containing polysiloxane) may be used. When the optional modifying agent or the coupling agent is used, the amount of the agent is preferably adjusted to 0.05 mol or less with respect to 1 mol of metal atoms which are involved in polymerization and contained in the polymerization initiator, more preferably 0.01 mol or less.

In end-modification of an active end of the conjugated diene-based polymer having the active end, the amount of the compound [M] used in the modification is preferably 50 parts by mass or more, with respect to the total amount (100 parts by mass) of the compounds involved in the reaction with the conjugated diene-based polymer having an active end (i.e., the total amount of the compound [M] and the optional modifying agent or the coupling agent), more preferably 70 parts by mass or more, still more preferably 80 parts by mass or more, yet more preferably 90 parts by mass or more.

In the case where the modified conjugated diene-based polymer contained in the reaction mixture is isolated, a known solvent removal method (e.g., steam stripping), drying (e.g., a thermal treatment), etc. may be employed. The weight average molecular weight (as reduced to polystyrene) of the modified conjugated diene-based polymer of the present disclosure determined through gel permeation chromatography (GPC) is preferably 1.0×10⁵ to 2.0×10⁶, from the viewpoint of providing a cross-linked product having high mechanical strength, low heat generation performance, and excellent wear resistance. The weight average molecular weight is more preferably 1.5×10⁵ to 1.5×10⁶, still more preferably 2.0×10⁵ to 1.2×10⁶. The weight average molecular weight of the modified conjugated diene-based polymer corresponds to a weight average molecular weight calculated from all the peaks in a GPC curve measured after reaction of the conjugated diene-based polymer having an active end with the compound [M] (i.e., total weight average molecular weight).

In a GPC curve obtained through GPC after reaction of the conjugated diene-based polymer having an active end with the compound [M], when the GPC curve is multimodal, the ratio (AT/AL) of the area (AT) of a peak area corresponding to a peak top molecular weight twice or more of the peak top molecular weight at the lowest molecular weight peak to the total peak area (AL) of the GPC curve (hereinafter, the ratio may also be referred to as a "coupling ratio regarding to 2 or more branches") is preferably 400 or more. When the ratio is 400 or higher, a modified conjugated diene-based polymer having a sufficiently high Mooney viscosity and a sufficiently low cold flow value can be provided. From such a viewpoint, the coupling ratio regarding 2 or more branches is more preferably 450 or higher, still more preferably 500 or higher.

The peak top molecular weight at the lowest peak of the molecular weight determined through GPC after reaction of the conjugated diene-based polymer having an active end with the compound [M] (hereinafter may also be referred to as a "1st peak weight average molecular weight" is preferably 5.0×10⁴ to 2.0×10⁶, more preferably 8.0×10⁴ to 1.5×10⁶, still more preferably 1.0×10⁵ to 1.2×10⁶.

In the GPC curve obtained through GPC after reaction of the conjugated diene-based polymer having an active end with the compound [M], the ratio of the peak height (P_{AH}) to the peak height (P_{AL}), wherein P_{AH} represents a peak height corresponding to a peak top molecular weight twice or more of the peak top molecular weight at the lowest molecular weight peak and P_{AL} represents a height of a peak at the lowest molecular weight, is defined as a GPC peak height ratio. Preferably, the GPC peak height ratio (P_{AH}/P_{AL}) does not show considerable variance in a period immediately after production of the modified conjugated diene-based polymer, from the viewpoint of a small change in characteristics of the polymer. In one example, when the P_{AH}/P_{AL} immediately after production of the modified conjugated diene-based polymer is defined as 100, the P_{AH}/P_{AL} after storage at 25°C for 2 months therefrom is preferably 85 to 100, more preferably 90 to 100, still more preferably 92 to 100.

The change in characteristics of the polymer can also be evaluated on the basis of the Mooney viscosity of the polymer as an index. Specifically, the change over time of the Mooney viscosity of the modified conjugated diene-based polymer is preferably small, immediately after production of the modified conjugated diene-based polymer, from the viewpoint of a small change in characteristics of the polymer. In one example, when the Mooney viscosity immediately after production of the modified conjugated diene-based polymer is defined as 100, the Mooney viscosity after storage at 25°C for 2 months therefrom is preferably 90 to 120, more preferably 95 to 115. The Mooney viscosity of the polymer was determined in accordance with JIS K6300-1:2013 by means of an L rotor under the specific conditions (preliminary heating: 1 minute, rotor operation time: 4 minutes, and temperature: 100°C).

The modified conjugated diene-based polymer produced through the above steps has a structure in which a modified or unmodified conjugated diene-based polymer chain is bound to one or a plurality of reaction points (more particularly, a carbon-hetero atom multiple bond) in one molecule of the compound [M]. The compound [M] has at least one carbon-hetero atom multiple bond derived from the functional group F1, at least one nitrogen-containing functional group derived from the functional group F2, and at least one monohydrocarbyloxysilyl group or mono(dihydrocarbylamino)silyl group derived from the functional group F3. By use of such a compound [M] as a termination end-modifying agent, conceivably, steric hindrance is provided around silyl groups, whereby reaction between the (modified) conjugated diene-based polymer and the carbon-hetero atom multiple bond can be preferentially evoked, and silanization can be promoted by the nitrogen-containing functional group.

Particularly, the compound [M] has a monohydrocarbyloxysilyl group or a mono(dihydrocarbylamino)silyl group, as a silicon-containing functional group. Thus, conceivably, as compared with the corresponding dihydrocarbyloxysilyl group, trihydrocarbyloxysilyl group, bis(dihydrocarbylamino)silyl group, and tris(dihydrocarbylamino)silyl group, the amount of hydrocarbyloxy groups and (dihydrocarbylamino) groups which can bond to a silicon atom in the modified conjugated diene-based polymer formed through reaction of the conjugated diene-based polymer having an active end with the compound [M] can be more reduced. In other words, conceivably, the compound [M] can reduce the number of the hydrocarbyloxy group and (dihydrocarbylamino) group which are incorporated into an end of the modified conjugated diene-based polymer and bond to a silicon atom to 1 or less, while the bonding points with the conjugated diene-based polymer chain are secured. As a result, conceivably, the modified conjugated diene-based polymer, which is a reaction product between the conjugated diene-based polymer having an active end and the compound [M], exhibits a sufficiently high Mooney viscosity, sufficiently suppressed cold flow, and suppressed intermolecular condensation, whereby a change over time in GPC peak height ratio or Mooney viscosity during storage can be minimized. Also conceivably, when silica is added to the modified conjugated diene-based polymer, formation of a covalent bond or interaction between the modified conjugated diene-based polymer and silica is further promoted, whereby a cross-linked product formed by use of the modified conjugated diene-based polymer successfully exhibits excellent low heat generation performance.

According to the aforementioned production method including the polymerization step and modification step, there can be yielded a branched modified conjugated diene-based polymer having a structure in which a conjugated diene-based polymer chain is bound to a carbon-hetero atom multiple bond present in the functional group F1. When the functional group F2 is group "-C(R⁷)=N-", there can be yielded a branched modified conjugated diene-based polymer having a structure in which a conjugated diene-based polymer chain is bound to carbon-hetero atom multiple bonds present in the functional groups F1 and F2. More specifically, according to the production method of the present disclosure, a modified conjugated diene-based polymer represented by formula (3) can be yielded by use of a compound represented by the aforementioned formula (1) as the compound [M]. Also, a modified conjugated diene-based polymer represented by formula (4) can be yielded by use of a compound represented by the aforementioned formula (2) as the compound [M]. 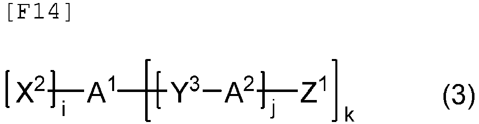 (In formula (3), X² is represented by any of the group represented by formulas (5) to (8); Y³ represents a group represented by formula (9), a group represented by formula (10), group "-N (SiR¹³R¹⁴R¹⁵) - ", or group "-NR¹⁶-"; each of R¹³, R¹⁴, R¹⁵, and R¹⁶ independently represents a C1 to C20 hydrocarbyl group; Z¹ represents group "-Si(R⁸)₂(OR⁹)" or group "-Si(R¹⁰)₂(NR¹¹R¹²)"; each of R⁸, R¹⁰, R¹¹, and R¹² independently represents a C1 to C20 hydrocarbyl group; R⁹ represents a C1 to C20 hydrocarbyl group or a C3 to C30 monovalent group in which methylene groups forming a hydrocarbyl group are partially substituted with an oxygen atom; A¹ represents a C1 to C20 (i+k)-valent hydrocarbon group or a C1 to C20 (i+k)-valent group having at least one atom selected from the group consisting of a nitrogen atom, an oxygen atom, and a sulfur atom, and no active hydrogen; A² represents a hydrocarbylene group; i, j, and k each are an integer of 1 to 10 and satisfy 2≤i+k≤10; and X², Y³, Z¹, and A² are identical to or different from one another, when a plurality of groups of each member are present.) 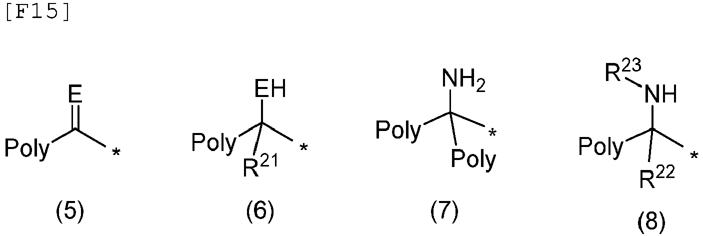 (In formulas (5) to (8), Poly represents a modified or unmodified conjugated diene-based polymer chain; E represents an oxygen atom or a sulfur atom; R²¹ represents a hydrogen atom, a tertiary alkyl group, group "-CR³¹=CR³²-R³³", group "-C ≡CR³⁴" (each of R³¹, R³², R³³, and R³⁴ independently represents a hydrogen atom or a C1 to C20 hydrocarbyl group), an aryl group, or a modified or unmodified conjugated diene-based polymer chain; R²² represents a hydrogen atom, a tertiary alkyl group, group "-CR³¹=CR³²-R³³", group "-C≡CR³⁴" or an aryl group; R²³ represents a C1 to C20 hydrocarbyl group; and "*" represents a bond to a tertiary carbon atom or a carbon atom forming a carbon-carbon unsaturated bond in a chain structure or a ring structure, among the carbon atoms included in A¹.) 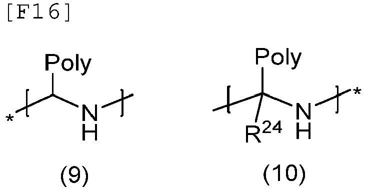 (In formulas (9) and (10), Poly represents a modified or unmodified conjugated diene-based polymer chain; R²⁴ represents a C1 to C20 hydrocarbyl group; and "*" represents a bond to A¹.) 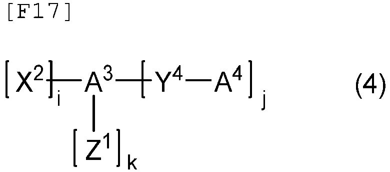 (In formula (4), X² and Z¹ have the same definitions as those in formula (3); "*" in formulas (5) to (8) represents a bond to a tertiary carbon atom or a carbon atom forming a carbon-carbon unsaturated bond in a chain structure or a ring structure, among the carbon atoms included in A³; Y⁴ has the same definition as that Y³ in formula (3); "*" in formulas (9) and (10) represents a bond to A³; A³ represents a C1 to C20 (i+j+k)-valent hydrocarbon group or a C1 to C20 (i+j+k)-valent group having at least one atom selected from the group consisting of a nitrogen atom, an oxygen atom, and a sulfur atom, and no active hydrogen; A⁴ represents a hydrocarbyl group; i, j, and k each are an integer of 1 to 10 and satisfy 2≤i+j+k≤10; and X², Y⁴, Z¹, and A⁴ are identical to or different from one another, when a plurality of groups of each member are present).

In the above formulas (3) to (10), the same reference numerals as employed in the formulas (1) and (2) are defined by the same definitions. When each of R²¹ and R²² in the X² is a tertiary alkyl group, group "-CR³¹=CR³²-R³³", group "-C≡ CR³⁴, " or an aryl group, the same definitions of R⁴ and R⁵ are applied. To the C1 to C20 hydrocarbyl group of R²³ and R²⁴, the same definitions as employed in R², R⁴, and R⁶ are also applied.

The moiety "Poly" in X² is a structure corresponding to the conjugated diene-based polymer having an active end produced in the aforementioned polymerization step. The conjugated diene-based polymer chain of Poly may have a functional group which covalently bonds or interacts with silica at an end of a polymer chain. The functional group present at an end of the conjugated diene-based polymer chain is preferably a nitrogen-containing group, from the viewpoint of a high effect of improving the low fuel consumption performance provided by the cross-linked product. The same definitions as employed in the above formula (1) are also applied to A¹ and A², and the same definitions as employed in the above formula (2) are also applied to A³ and A⁴.

### <Polymer composition>

The polymer composition of the present disclosure may further contain various components in addition to the aforementioned modified conjugated diene-based polymer (hereinafter may also be referred to as a "modified conjugated diene-based polymer [A]").

### [B] Silica

The polymer composition of the present disclosure may contain silica [B]. The amount of silica [B], with respect to 100 parts by mass of the rubber component containing modified conjugated diene-based polymer [A], is preferably 20 to 120 parts by mass, more preferably 30 to 100 parts by mass. When the amount of silica [B], with respect to 100 parts by mass of the rubber component containing modified conjugated diene-based polymer [A], is 20 parts by mass or more, low-loss performance, fracture resistance, and wear resistance of the polymer composition can be sufficiently enhanced, whereas when the amount of silica [B] is 120 parts by mass or less, processability of the polymer composition can be sufficiently enhanced.

As used herein, the "rubber component" contained in the polymer composition refers to a polymer that can provide, through curing, a cured product exhibiting rubber elasticity. The cured product evokes considerable deformation at room temperature through application of small force (e.g., deformation of twice or more elongation by stretching at room temperature), and rapidly returns to substantially its original form when the force is removed.

No particular limitation is imposed on the silica [B], and examples of the silica [B] include wet silica (hydrous silicic acid), dry silica (silicic anhydride), calcium silicate, and aluminum silicate. Of these, wet silica is preferred. The silica [B] may be used singly or in combination of two or more species. The BET specific surface area (values determined in accordance with ISO 5794/1) of the silica [B] is preferably 40 to 350 m²/g, more preferably 80 to 350 m²/g, still more preferably 120 to 350 m²/g. A silica product having a BET specific surface area falling within the range is advantageous, from the viewpoint of achieving both reinforcement of the rubber products produced from the composition and good dispersibility of silica in modified conjugated diene-based polymer [A]. As such silica products, there may be used commercial products such as "Nipsile AQ" (BET specific surface area: 205 m²/g) and "Nipsil KQ" (products of Tosoh Silica Corporation), and "Ultrasil VN3" (product of Degussa, BET specific surface area: 175 m²/g).

As silica products contained in the polymer composition, two or more species each having different specific surface areas may be used. More specifically, there may be employed a first silica species having a CTAB (cetyltrimethylammonium bromide) specific surface area of 180 m²/g or more, a BET specific surface area of 185 m²/g or more, and an aggregate size of 45 nm or greater, in combination with a second silica species having a CTAB specific surface area of 95 m²/g or less and a BET specific surface area of 100 m²/g or less. The CTAB specific surface area may be determined in accordance with ASTM D3765-92.

One embodiment of the polymer composition of the present disclosure contains a first silica species having a CTAB specific surface area of 180 m²/g or more, a BET specific surface area of 185 m²/g or more, and an aggregate size of 45 nm or greater, in combination with a second silica species having a CTAB specific surface area of 95 m²/g or less and a BET specific surface area of 100 m²/g or less. By use of the aforementioned first and second silica species, the first silica having a small mean primary particle size and a relatively large aggregate size can be suitably dispersed in the rubber component. As a result, dispersibility of silica can be improved, and excellent rubber breakage strength, wear resistance, fuel efficiency, and processabily can be attained.

The CTAB specific surface area of the first silica species is preferably 190 m²/g or more, more preferably 195 m²/g or more, still more preferably 197 m²/g or more. When the CTAB specific surface area is less than 180 m²/g, difficulty is generally encountered in attaining sufficiently improved rubber breakage strength and wear resistance. The CTAB specific surface area is preferably 350 m²/g or less, more preferably 300 m²/g or less, still more preferably 250 m²/g or less. When the CTAB specific surface area is in excess of 350 m²/g, dispersibility of silica is impaired to evoke aggregation. In such as a case, the physical properties tend to be impaired.

The BET specific surface area of the first silica species is preferably 190 m²/g or more, more preferably 195 m²/g or more, still more preferably 210 m²/g or more. When the BET specific surface area is less than 185 m²/g, difficulty is generally encountered in attaining sufficiently improved rubber breakage strength and wear resistance. The BET specific surface area is preferably 350 m²/g or less, more preferably 300 m²/g or less, still more preferably 260 m²/g or less. When the BET specific surface area is in excess of 350 m²/g, dispersibility of silica is impaired to evoke aggregation. In such as a case, the physical properties tend to be impaired. The BET specific surface area may be determined in accordance with ASTM D3037-81.

The aggregate size of the first silica species is 45 nm or greater, preferably 50 nm or greater, more preferably 55 nm or greater, still more preferably 60 nm or greater. Also, the aggregate size species is preferably 100 nm or smaller, more preferably 80 nm or smaller, still more preferably 70 nm or smaller, particularly preferably 67 nm or smaller. When the first silica species has such an aggregate size, excellent fuel efficiency and wear resistance can be attained, while good dispersibility (processability) is maintained. The aggregate size of silica may be determined though a method disclosed in Japanese Patent Application Laid-Open (kokai) No. 2011-140613.

The mean primary particle size of the first silica species is preferably 25 nm or small, more preferably 22 nm or small, still more preferably 17 nm or smaller, particularly preferably 14 nm or smaller. No particular limitation is imposed on the lower limit of the mean primary particle size. The mean primary particle size is preferably 3 nm or greater, more preferably 5 nm or greater, still more preferably 7 nm or greater. Although the first silica species has such a small mean primary particle size, by virtue of the structure of carbon black having the aforementioned aggregate size, dispersibility of silica (processability) can be more improved, whereby fuel efficiency and wear resistance can be further improved. The mean primary particle size of silica can be determined by observing the silica species under a transmission or a scanning electron microscope; measuring particle sizes of 400 or greater primary particles of silica observed in a vision field; and averaging the measurements.

The CTAB specific surface area of the second silica species is preferably 10 m²/g or more, more preferably 20 m²/g or more, still more preferably 30 m²/g or more. When the CTAB specific surface area is less than 10 m²/g, reinforcement performance decreases, and difficulty may be encountered in securing dynamic strength and wear resistance required for the polymer composition for obtaining rubber for tires. The CTAB specific surface area is preferably 80 m²/g or less, more preferably 60 m²/g or less, still more preferably 50 m²/g or less. When the CTAB specific surface area exceeds 95 m²/g, dispersibility of silica is impaired, and difficulty may be countered in improving rubber breakage strength and wear resistance.

The BET specific surface area of the second silica species is preferably 10 m²/g or more, more preferably 20 m²/g or more, still more preferably 30 m²/g or more. When the BET specific surface area is less than 10 m²/g, reinforcing performance decreases. In such a case, difficulty may be encountered in securing dynamic strength and wear resistance required for a polymer composition for obtaining rubber for tires. The BET specific surface area is preferably 85 m²/g or less, more preferably 60 m²/g or less, still more preferably 50 m²/g or less. When the BET specific surface area is in excess of 100 m²/g, dispersibility of silica decreases, and difficulty is conceivably encountered in enhancement of fracture strength and wear resistance of rubber.

The mean primary particle size of the second silica species is preferably 20 nm or greater, more preferably 25 nm or greater, still more preferably 30 nm or greater, particularly preferably 35 nm or greater, most preferably 55 nm or greater. Also, the mean primary particle size is preferably 500 nm or smaller, more preferably 200 nm or smaller, still more preferably 100 nm or smaller, particularly preferably 70 nm or smaller. By virtue of such a mean primary particle size, rubber breakage strength and wear resistance can be improved.

### [C] Carbon black

From the viewpoints of fracture characteristics and wear resistance, the polymer composition of the present disclosure preferably contains carbon black [C]. No particular limitation is imposed on the carbon black, and examples thereof include carbon black products of a grade such as GPF, FEF, HAF, ISAF, or SAF. No particular limitation is imposed on the nitrogen adsorption specific surface area (N2SA) of carbon black, and it is preferably 50 to 200 m²/g, more preferably 70 to 150 m²/g, from the viewpoint of further enhancement of the effects of the present disclosure and the like. The nitrogen adsorption specific surface area (N₂SA) is defined as a value obtained by measuring the amount of nitrogen adsorbed on the surface of carbon black through JIS K6217-2:2001 "part 2: Determination of specific surface area, Nitrogen adsorption method, Single point method." The carbon black products may be used singly or in combination of two or more species. Also, the amount of carbon black is preferably 1 to 150 parts by mass, more preferably 5 to 120 parts by mass with respect to 100 parts by mass of modified conjugated diene-based polymer [A].

### [Other fillers]

The polymer composition of the present disclosure may contain, in addition to the aforementioned silica [B] and carbon black [C], an additional filler. Examples of the additional filler include alumina (Al₂O₃) such as γ-alumina or α-alumina; alumina monohydrate (Al₂O₃·H₂O) such as bohemite or diaspore; aluminum hydroxide [Al(OH)₃] such as gibbsite or bayerite; aluminum carbonate [Al₂(CO₃)₃], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (HO₂), titanium black (TiO₂ₙ₋₁), calcium oxide (CaO), calcium hydroxide [Ca(OH)₂], aluminum magnesium oxide (MgO·Al₂O₃), clay (Al₂O₃·2SiO₂), kaolin (Al₂O₃·2SiO₂·2H₂O), pyrophyllite (Al₂O₃·4SiO₂-H₂O), bentonite (Al₂O₃·4SiO₂·2H₂O), aluminum silicate (e.g., Al₂SiO₅ or Al₄·3SiO₄·5H₂O), magnesium silicate (e.g., Mg₂SiO₄ or MgSiO₃), calcium silicate (e.g., Ca₂SiO₄), aluminum calcium silicate (e.g., Al₂O₃·CaO·2SiO₂), magnesium calcium silicate (CaMgSiO₄), calcium carbonate (CaCO₃), zirconium oxide (ZrO₂), zirconium hydroxide [ZrO(OH)₂·nH₂O], and zirconium carbonate [Zr(CO₃)₂]; and crystalline aluminosilicate salts such as various zeolites, which contains hydrogen, an alkali metal, or an alkaline earth metal for compensating electric charge.

In the polymer composition of the present disclosure, the filler (including silica [B] and carbon black [C]) content is preferably 30 parts by mass or more, more preferably 40 parts by mass or more, with respect to 100 parts by mass of rubber component(s). Also, the filler content (including silica [B] and carbon black [C]) is preferably 150 parts by mass or less, more preferably 130 parts by mass or less. When the filler content satisfies the above conditions, in the case where the polymer composition of the present disclosure is used for producing tire treads, low rolling resistance, braking distance on the wet road surface, handling performance on the dry road surface, and wear resistance of the tire can be further improved in a highly well-balanced manner.

### [D] Other rubber components

In the present disclosure, at least one diene-based rubber may be used as a rubber component different from modified conjugated diene-based polymer [A]. Such a component is selected from among, for example, at least one diene rubber selected from natural rubber, isoprene rubber, butadiene rubber, emulsion-polymerized styrene-butadiene rubber, solution-polymerized styrene-butadiene rubber, butyl rubber, halogenated butyl rubber, and ethylene-propylene rubber. Among them, the polymer composition preferably contains at least one species selected from natural rubber, butadiene rubber, and styrene-butadiene rubber. When components [D] and [A] are mixed together, the components may be mixed during kneading by means of a Banbury mixer, a roller, or the like, which is generally carried out. Alternatively, component [D] may be added to a solution of polymer [A] after polymerization, and then the mixture is dried, to thereby complete mixing.

The proportion between component [A] and component [D] is as follows. The amounts of component [A] and component [D], with respect to 100 parts by mass of rubber components (component [A] + component [D]), are preferably 5 to 45 parts by mass and 65 to 95 parts by mass, respectively, more preferably 10 to 40 parts by mass and 60 to 90 parts by mass, respectively. Particularly, relative amounts of 15 to 35 parts by mass and 65 to 85 parts by mass, respectively, are optimum, for serving as a polymer composition for producing tires.

In the present disclosure, a part or the entirety of other rubber components [D] may employ a liquid rubber, from the viewpoint of further enhancement of dry grip performance, wet grip performance, ice grip performance, and blow out resistance.

Examples of the liquid rubber include liquid polyisoprene (liquid IR), liquid polybutadiene (liquid BR), liquid styrene-butadiene copolymer (liquid SBR), and liquid ethylene-propylene copolymer (liquid EP). For example, a liquid SBR having a weight average molecular weight of 1,000 to 100,000, preferably 2,000 to 80,000 may be used. The weight average molecular weight refers to a weight average molecular weight (reduced to polystyrene) determined through gel permeation chromatography (GPC). The liquid rubber exhibits a flowability at 23°C.

### [E] Thermoplastic/thermosetting resin

The polymer composition of the present disclosure may contain thermoplastic/thermosetting resin [E] (hereinafter may also be referred to simply as "resin [E]"). The resin [E] is preferably at least one species selected from the group containing of a styrene-based resin, polyethylene, a C5-type resin, a C9-type resin, a C5/C9-type resin, a dicyclopentadiene-based resin, an alkyl-phenolic resin, and a terpene-based resin, from the viewpoint of providing a cross-linked product having more excellent properties including mechanical strength, wear resistance, and anti-crack-propagation property. These resins [E] may be used singly or in combination of two or more species.

The styrene-based resin is a polymer obtained from a styrene-based monomer. Among such polymers, preferred is a styrene-based polymer having structural units derived from a styrene-based monomer in an amount of 20 mass% or more with respect to the entire amount of monomer units of the styrene-based resin. Examples of the styrene-based monomer include styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, and p-chlorostyrene. Among them, the styrene-based monomer is preferably at least one of styrene and α-methylstyrene.

The styrene-based resin may be a homopolymer formed through polymerization of one single styrene-based monomer, or a copolymer formed through co-polymerization of two or more styrene-based monomers. Alternatively, the styrene-based resin may be a copolymer of a styrene-based monomer and another monomer which can co-polymerize with the styrene-based monomer. Examples of the above additional monomer include acrylonitriles such as acrylonitrile and (meth)acrylonitrile; unsaturated carboxylic acids such as acrylic acids and (meth)acrylic acids; unsaturated carboxylic acid esters such as methyl acrylate and methyl (meth)acrylate; dienes such as chloroprene, butadiene, and isoprene; olefins such as 1-butene and 1-pentene; and α,β-unsaturated carboxylic acid or anhydride such as maleic anhydride.

The softening point of the styrene-based resin is preferably 30°C or higher, more preferably 60°C or higher, still more preferably 80°C or higher. When the softening point is 30°C or higher, the effect of improving the anti-crack-propagation property of the cross-linked product tends to be easily attained. The softening point of the styrene-based resin is preferably 160°C or lower, more preferably 130°C or lower, still more preferably 100°C or lower. When the softening point is 160°C or lower, dispersibility of the resin is enhanced. In this case, anti-crack-propagation property, wear resistance, and breaking strength can be readily improved. In the present disclosure, the softening point of the styrene-based resin is determined through a method defined in JIS K 6220-1:2015 by means of a ring and ball softening point apparatus. The temperature at which a ball placed on a sample falls to a base plate by softening the sample is employed as the softening point.

As the styrene-based resin, there may be used a block polymer (thermoplastic elastomer) including a conjugated diene-based resin block as a soft segment and a polystyrene-based block as a hard segment. Use of such a block polymer is preferred, since the effect of improving the anti-crack-propagation property can be further enhanced. In the conjugated diene-based resin block contained in the block polymer, a part of C-C double bonds in structural units derived from the conjugated diene compound may be hydrogenated.

Examples of the conjugated diene compound forming the aforementioned conjugated diene-based resin block include 1,3-butadiene, isoprene, 2,3-dimethyl-1,3-butadiene, 1,3-pentadiene, and 1,3-hexadiene. These conjugated diene compounds may be used singly or in combination of two or more species. Of these, at least one of 1,3-butadiene and isoprene is preferred as the conjugated diene compound. The conjugated diene unit content of the block polymer is preferably 20 mass% or more, more preferably 30 mass% or more. Also the conjugated diene unit content is preferably 80 mass% or less, more preferably 70 mass% or lower.

From the viewpoint of achieving higher breaking strength, the ratio of the polystyrene-based block in the aforementioned block polymer is preferably 20 mass% or more. Also, the polystyrene-based block content is preferably 80 mass% or less, more preferably 70 mass% or less. The polystyrene-based block content, conjugated diene-based resin block content, and conjugated diene unit content of the block polymer can be calculated by corresponding integral proportions obtained by a ¹H-NMR spectrum.

Specific examples of the block polymer include styrene-butadiene block copolymer, styrene-isoprene block copolymer, an epoxidated product of styrene-butadiene block copolymer, and a block copolymer in which a part of conjugated diene-based resin blocks of a styrene-butadiene block copolymer or a styrene-isoprene block copolymer have been hydrogenated. More specific examples include styrene-butadiene-styrene block copolymer (SBS), styrene-isoprene-styrene block copolymer (SIS), styrene-butadiene-butylene-styrene block copolymer (SBBS), an epoxidated product of styrene-butadiene-styrene block copolymer, and hydrogenated products of these copolymers. Among these block polymers, from the viewpoint of sufficient cross-linking points, SBS and SIS (having a conjugated diene-based polymer block in which a soft segment has not been hydrogenated) and an epoxidated product of styrene-butadiene-styrene block copolymer are preferably used.

Examples of the polyethylene species include low-density polyethylene (LDPE), high-density polyethylene (HDPE), and linear low-density polyethylene (LLDPE). The C5-type resin is a solid polymer (C5-type synthetic petroleum resin) obtained through polymerization of a C5 fraction in the presence of a Friedel-Crafts catalyst (e.g., AlCl₃ or BF₃). Specific examples of the C5-type resin include copolymers mainly formed from isoprene, cyclopentadiene, 1,3-pentadiene, 1-pentene, etc., 2-pentene-dicyclopentadiene copolymer, and a polymer mainly formed from 1,3-pentadiene.

The C9-type resin is a solid polymer (C9-type synthetic petroleum resin) obtained through polymerization of a C9 fraction in the presence of a Friedel-Crafts catalyst (e.g., AlCl₃ or BF₃). Specific examples of the C9-type resin include copolymers mainly formed from indene, methylindene, vinyltoluene, etc. The C5/C9-type resin is a solid polymer (C5/C9-type synthetic petroleum resin) obtained through polymerization of C5 to C9 fractions in the presence of a Friedel-Crafts catalyst (e.g., AlCl₃ or BF₃). Specific examples of the C5/C9-type resin include copolymers mainly formed from, for example, vinyltoluene and indene. From the viewpoint of compatibility with rubber components, the C5/C9-type resin preferably has low C≥9 component content. Specifically, the C5/C9 resin preferably has an amount of C≥9 components in the total amount of the resin less than 50 mass%, more preferably 40 mass% or less.

The dicyclopentadiene-based resin is a petroleum resin obtained mainly from dicyclopentadiene present in a C5 fraction. Specific examples of the dicyclopentadiene-based resin include "Markarez M" series (M-890A, M-845A, M-990A, etc.) (products of Marzen Petrochemical Co., Ltd.). Examples of the alkylphenolic resin include alkylphenol acetylene resin such as p-tert-butylphenol acetylene resin; and alkylphenol-formaldehyde resin of low polymerization degree.

The terpene resin is a solid resin prepared by polymerizing turpentine (recovered in production of rosin from pine trees) or a polymerization component isolated therefrom in the presence of a Friedel-Crafts catalyst, and examples thereof include β-pinene resin and α-pinene resin. Commercial products of the terpene resin may also be used. Examples thereof include "YS Resin" series (PX-1250, TR-105, etc.) (products of Yasuhara Chemical Co., Ltd.) and "Piccolyte" series (A115, S115, etc.) (products of Hercules).

A typical example of the terpene-aromatic compound resin is a terpene-phenolic resin. The terpene-phenolic resin may be prepared by a process reacting a terpene with various phenols in the presence of a Friedel-Crafts catalyst, or such a process further concomitant with condensation with formalin. No particular limitation is imposed on the raw material terpene, and monoterpene hydrocarbons such as α-pinene and limonene are preferred. A monoterpene hydrocarbon including α-pinene is more preferred, with pure α-pinene being particularly preferred. In the present disclosure, a terpene-phenolic resin having low phenolic content is preferred. The term "low phenol content" refers to the phenolic content of the total amount of the resin being less than 50 mass%, preferably 40 mass% or less. When a terpene-aromatic compound resin, in particular, a terpene-phenolic resin, is used as resin [E], handling performance can also be enhanced. Commercial products of the terpene-aromatic compound resin may be used. Examples of commercial products include "Tamanol 803L" and "Tamanol 901" (products of Arakawa Chemical Industries, Ltd.) and "YS Polyster (registered trademark)" series (products of Yasuhara Chemical Co., Ltd.).

The amount of resin [E] to be incorporated is preferably 1 part by mass or more, with respect to 100 parts by mass of the rubber component(s) contained in the polymer composition. Use of resin [E] in an amount of 1 part by mass or more is suitable, since the effect of improving the wear resistance, breaking strength, and anti-crack-propagation property of the cross-linked product obtained from the polymer composition can be satisfactorily enhanced. The amount of resin [E] is more preferably 3 parts by mass or more, still more preferably 7 parts by mass or more, with respect to 100 parts by mass of the rubber component(s). From the viewpoint of maintaining characteristics of the rubber composition at suitable levels, the amount of resin [E] is preferably 50 parts by mass or less, more preferably 30 parts by mass or less, still more preferably 25 parts by mass or less, with respect to 100 parts by mass of the rubber component(s) contained in the polymer composition. These resins [E] may be used singly or in combination of two or more species.

### [F] Silane coupling agent

In the present disclosure, a silane coupling agent may be added, to thereby further enhance dispersibility of silica. No particular limitation is imposed on the silane coupling agent to be used, but a sulfur-containing silane coupling agent is preferred. Examples of the sulfur-containing silane coupling agent include bis(3-triethoxysilylpropyl) tetrasulfide, bis(3-triethoxysilylpropyl) disulfide, 3-trimethoxysilylpropylbenzothiazole tetrasulfide, γ-mercaptopropyltriethoxysilane, and 3-octanoylthiopropyltirethoxysilane.

The amount of the silane coupling agent to be used is preferably 1 to 20 parts by mass, with respect to 100 mass of silica. When the amount of the silane coupling agent is less than 1 part by mass, sufficient enhancement dispersibility of silica may fail to attain due to an excessively small amount. In contrast, when the amount is in excess of 20 parts by mass, processability and elongation at break may be impaired in some cases. The amount of the silane coupling agent is more preferably 5 to 15 parts by mass, with respect to 100 parts by mass of silica.

### [G] Cross-linking agent

The polymer composition of the present disclosure may contain a cross-linking agent [G]. By virtue of the cross-linking agent [G] contained in the polymer composition of the present disclosure, a cross-linked product having an improved mechanical strength and wear resistance can be yielded. Examples of the cross-linking agent include sulfur, sulfur halide, an organic peroxide, a quinone dioxime, an organic polyvalent amine compound, and an alkylphenol resin having a methylol group. Among them, sulfur is generally used. The amount of cross-linking agent incorporated into the polymer composition is preferably 0.1 to 5 parts by mass with respect to 100 parts by mass of the total rubber component(s) in the composition, more preferably 0.5 to 3 parts by mass.

Into the polymer composition, a process oil which is generally used for oil-extending an elastomer may be incorporated as an extender oil. The process oil is incorporated into a polymer composition through, for example direct addition thereof during blending of rubber. Various oils known in the art are preferably used as a process oil, and examples of the process oil include aromatic oil, paraffin-based oil, naphthene-based oil, and vegetable oil and, further oils having low polycyclic aromatic compound content (i.e., low-PCA oils) such as a mild extraction solvate (MES), a treated distillate aromatic extract (TDAE), and a special residual aromatic extract (SRAE); and heavy naphthene-based oil. Examples of commercial products of MES, TDAE, and SRAE include Catenex SNR (heavy paraffin obtained by dewaxing a distilate with solvent) (product of Shell) as MES; Vivatec 500 (product of H&R Wasag AG) as TDAE; and NC140 (product of Japan Energy Corp.) as SRAE. The amount of process oil is preferably 10 to 100 parts by mass, with respect to the total amount of polymer components contained in the polymer composition as 100 parts by mass.

In addition to the aforementioned components, various additives generally employed in polymer compositions for producing rubber for tires may be incorporated into the polymer composition. Examples of such additives include an antioxidant, zinc flower, stearic acid, a softening agent, a vulcanization accelerator, a silane coupling agent, a compatibilizer, a vulcanization aid, a processing aid, and an anti-scorching agent. The amount of each additive may be appropriately determined, so long as the effects of the present disclosure are not impaired.

The polymer composition of the present disclosure can be applied, as a cross-linked product, to various rubber products, by kneading polymer components and optional components by means of a kneader such as an open-type kneader (e.g., a roller) or a close-type kneader (e.g., a Banbury mixer); molding; and cross-linking (vulcanizing). More specifically, the cross-linked product of the present disclosure can be applied to, for example, tire parts such as tire tread, under tread, carcass, sidewall, and bead; sealing materials such as packings, gaskets, weather strips, and O-rings; exterior/interior coating materials for vehicles including automobiles, marine vessels, aircraft, and trains; building materials; vibration-proof rubbers for industrial machines, facilities, etc.; hoses and hose covers such as diaphragms, rollers, radiator hoses, and air hoses; belts such as power-transmission belt; linings; dust boots; materials of medical apparatus; fenders; electric wire insulating materials; and other industrial products.

According to the method for producing the modified conjugated diene-based polymer of the present disclosure, a modified conjugated diene-based polymer for obtaining a cross-linked product can be obtained, wherein the product exhibits excellent physical properties required for tires (e.g., low fuel consumption performance and strength). Thus, the polymer composition containing modified conjugated diene-based polymer [A] obtained in the present disclosure can be suitably used as a material particularly for forming treads or sidewalls of tires or both.

Production of tires may be carried out through any customary method. In one procedure, the polymer composition is kneaded by means of a kneader, and the kneaded product is formed into a sheet, which is placed at a predetermined position (e.g., outside the carcass in the case of sidewall) through a customary method, followed by performing vulcanization molding. As a result, treads or sidewalls are formed, to thereby yield a pneumatic tire.

The present disclosure, which has been described in detail hereinabove, provides the following means.
[Means 1] A method of producing a modified conjugated diene-based polymer, the method including a step of reacting a conjugated diene-based polymer having an active end with a compound [M], wherein the conjugated diene-based polymer having an active end is a polymer which is produced by polymerizing a monomer including a conjugated diene compound in the presence of a polymerization initiator including at least one of an alkali metal compound and an alkaline earth metal compound, and the compound [M] is a compound having the functional group F1, the functional group F2, and the functional group F3 shown above and no active hydrogen.
[Means 2] The method of producing the modified conjugated diene-based polymer as described in [Means 1], wherein the compound [M] is at least one species selected from the group consisting of a compound represented by the aforementioned formula (1) and a compound represented by the aforementioned formula (2).
[Means 3] The method of producing the modified conjugated diene-based polymer as described in [Means 1] or [Means 2], wherein the polymer has a weight average molecular weight of 100,000 to 2,000,000, as determined through gel permeation chromatography (GPC) after reaction of the conjugated diene-based polymer having an active end with the compound [M]
[Means 4] The method of producing the modified conjugated diene-based polymer as described in any of [Means 1] to [Means 3], wherein the monomer further includes an aromatic vinyl compound.
[Means 5] The method of producing the modified conjugated diene-based polymer as described in any of [Means 1] to [Means 4], wherein the monomer is polymerized by use of a mixture of at least one of an alkali metal compound and an alkaline earth metal compound with a compound having a functional group which covalently bonds or interacts with silica, as the polymerization initiator.
[Means 6] A modified conjugated diene-based polymer, which is a reaction product of a conjugated diene-based polymer having an active end with a compound [M], wherein the conjugated diene-based polymer having an active end is a polymer which is produced by polymerizing a monomer including a conjugated diene compound in the presence of a polymerization initiator including at least one of an alkali metal compound and an alkaline earth metal compound, and the compound [M] is a compound having the functional group F1, the functional group F2, and the functional group F3 shown above and no active hydrogen.
[Means 7] A modified conjugated diene-based polymer represented by the aforementioned formula (3) or (4).
[Means 8] A polymer composition comprising the modified conjugated diene-based polymer produced through the method as described in any of [Means 1] to
[Means 5] or the modified conjugated diene-based polymer as described in [Means 6] or [Means 7], and at least one species selected from the group consisting of silica and carbon black.
[Means 9] A cross-linked product formed by cross-linking of the polymer composition as described in [Means 8].
[Means 10] A tire having a tread and a sidewall, wherein one or both of them is formed by use of the polymer composition as described in [Means 8].
[Means 11] A compound represented by the aforementioned formula (1) or (2).

### Examples

The present disclosure will next be described in detail by way of examples, which should not be construed as limiting the disclosure thereto. Unless otherwise specified, "part(s)" and "%" in the Examples and Comparative Examples are on a mass basis. Physical properties of each polymer were measured through the following methods.

### [Characteristic evaluation of polymer and rubber]

·Vinyl bond content (mol%): Determined through 400 MHz ¹H-NMR.
·Bonded styrene content (mass%): Determined through 400 MHz ¹H-NMR.
·Weight average molecular weight (Mw): Determined from a molecular weight (in terms of polystyrene) chart (i.e., a GPC curve) obtained through gel permeation chromatography (GPC). Specific measurement conditions are as follows.

### (GPC measurement conditions)

Apparatus: HLC-8020 (product of Tosoh Corporation)
Column: GMH-HR-H (product of Tosoh Corporation). Two columns were connected in series.
Detector: Differential refractometer RI-8020 (product of Tosoh Corporation)
Eluent: Tetrahydrofuran
Column temperature: 40°C
Flow rate: 1.0 mL/min
Sample concentration: 10 mg/20mL

·Coupling ratio regarding 2 or more branches (%): In a GPC curve obtained through in Mw measurement, the ratio of the area of a peak area corresponding to a peak top molecular weight twice or more of the peak top molecular weight at the lowest molecular weight peak to the total area attributed to the polymer (as 100%)
·GPC peak height ratio: In a GPC curve obtained through in Mw measurement, the ratio (P_{AH}/P_{AL}) of the peak height (P_{AH}) to the peak height (P_{AL}), wherein P_{AH} represents a peak height corresponding to a peak top molecular weight twice or more of the peak top molecular weight at the lowest molecular weight peak and P_{AL} represents a height of a peak at the lowest molecular weight, was determined as a GPC peak height ratio. The GPC peak height ratio (P_{AH}/P_{AL}) was measured immediately after drying each polymer by means of a heat roller and after storage at 25°C for 2 months therefrom. The value of (P_{AH}/P_{AL}) after storage for 2 months with respect to the value immediately after drying (as 100) was employed as an index. As the value of (P_{AH}/P_{AL}) after storage for 2 months approaches 100, the change over time of the shape of the GPC curve can be evaluated as small (i.e., good consistency in quality).
·Mooney viscosity (ML₁₊₄, 100°C) : Measured in accordance with JIS K6300-1: 2013, by means of an L rotor under the specific conditions (preliminary heating: 1 minute, rotor operation time: 4 minutes, and temperature: 100°C).
·Cold flow (g/min): Measured by causing each polymer to pass through a 1/4-in orifice at a pressure of 3.5 lb/in² (2.4×10⁴ Pa) and a temperature of 50°C. The polymer sample as allowed to stand for 10 minutes to establish a stationary state. Then, the extrusion speed was measured. By converting the speed to a flow rate (g/min), to thereby obtain a value of cold flow. The smaller the cold flow value, the more suitable the consistency in rubber shape.

### <Synthesis of compound [M]>

Specific compounds represented by formula (M-2), (M-5), (M-9) to (M-11), and (M-23) (compounds M-2, M-5, M-9 to M-11, and M-23) were synthesized.

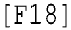

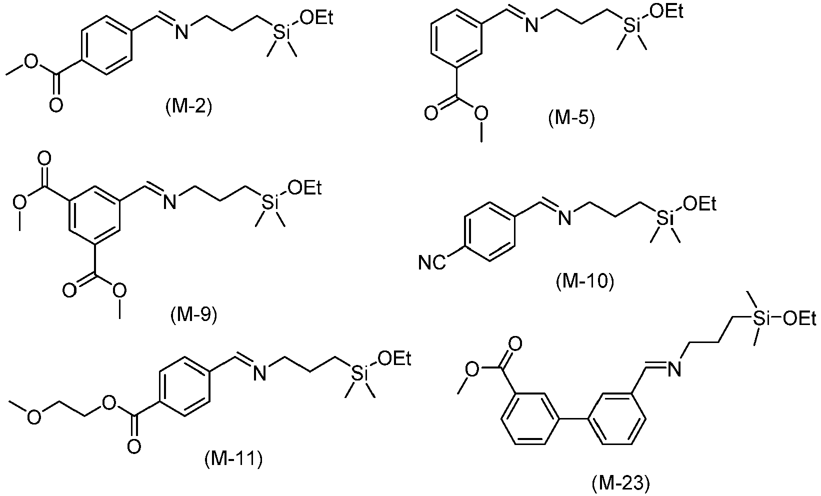

### [Synthesis Example 1: Synthesis of compound M-2]

To a 500-mL flask, toluene (solvent) (300 mL), methyl p-formylbenzoate (3.80 g, 23.2 mmol), and (3-aminopropyl)dimethylethoxysilane (3.88 g, 24.1 mmol) were added, and the mixture was refluxed at 120°C by means of a Dien-Stark apparatus. After confirmation of consumption of raw materials through gas chromatography (GC), the reaction mixture was filtered, and toluene (solvent) was distilled out under reduced pressure. The purity of the product was evaluated through ¹H-NMR spectral analysis. The product was used as a termination end-modifying agent to the modified conjugated diene-based polymer, without conducting further purification. The ¹H-NMR analytical results of compound M-2 were as follows.
¹H-NMR (solvent: CDCl₃) chemical shifts δ: 8.20 ppm (-N=CHAr, 1H), 8.07-8.09 ppm (benzene ring H, 2H), 7.96-7.97 ppm (benzene ring H, 2H), 3.84 ppm (CH₃-O-C=O-, 3H), 3.52-3.54 ppm (N-CH₂-CH₂-CH₂-Si, 2H, and CH₃-CH₂-O-Si, 2H), 1.65 ppm (N-CH₂-CH₂-CH₂-Si, 2H), 1.07 ppm (CH₃-CH₂-O-Si, 3H), 0.52 ppm (N-CH₂-CH₂-CH₂-Si, 2H), and -0.01 ppm (Si-(CH₃)₂, 6H) .

### [Synthesis Example 2: Synthesis of compound M-5]

The procedure of synthesis of compound M-2 was repeated, except that methyl m-formylbenzoate (3.80 g) was used instead of methyl p-formylbenzoate (3.80 g), to thereby yield compound M-5. The ¹H-NMR analytical results of compound M-5 were as follows.
¹H-NMR (solvent: CDCl₃) chemical shifts δ: 8.20 ppm (-N=CHAr, 1H), 8.14 ppm (benzene ring H, 1H), 8.07-8.09 ppm (benzene ring H, 1H) 7.95-7.98 ppm (benzene ring H, 1H), 7.68-7.72 ppm (benzene ring H, 1H), 3.84 ppm (CH₃-O-C=O-, 3H), 3.52-3.54 ppm (N-CH₂-CH₂-CH₂-Si, 2H, and CH₃-CH₂-O-Si, 2H), 1.65 ppm (N-CH₂-CH₂-CH₂-Si, 2H), 1.07 ppm (CH₃-CH₂-O-Si, 3H), 0.52 ppm (N-CH₂-CH₂-CH₂-Si, 2H), and -0.01 ppm (Si-(CH₃)₂, 6H) .

### [Synthesis Example 3: Synthesis of compound M-9]

The procedure of synthesis of compound M-2 was repeated, except that dimethyl 5-formylisophthalate (5.14 g) was used instead of methyl p-formylbenzoate (3.80 g), to thereby yield compound M-9. The ¹H-NMR analytical results of compound M-2 were as follows.
¹H-NMR (solvent: CDCl₃) chemical shifts δ: 8.20 ppm (-N=CHAr, 1H), 8.16 ppm (benzene ring H, 1H), 8.01-8.03 ppm (benzene ring H, 2H) 3.84 ppm (CH₃-O-C=O-, 3H), 3.52-3.54 ppm (N-CH₂-CH₂-CH₂-Si, 2H, and CH₃-CH₂-O-Si, 2H), 1.65 ppm (N-CH₂-CH₂-CH₂-Si, 2H), 1.07 ppm (CH₃-CH₂-O-Si, 3H), 0.52 ppm (N-CH₂-CH₂-CH₂-Si, 2H), and -0.01 ppm (Si-(CH₃)₂, 6H) .

### [Synthesis Example 4: Synthesis of compound M-10]

The procedure of synthesis of compound M-2 was repeated, except that p-cyanobenzaldehyde (3.73 g) was used instead of methyl p-formylbenzoate (3.80 g), to thereby yield compound M-10. The ¹H-NMR analytical results of compound M-10 were as follows.
¹H-NMR (solvent: CDCl₃) chemical shifts δ: 8.20 ppm (-N=CHAr, 1H), 7.80-7.83 ppm (benzene ring H, 2H), 7.70-7.67 ppm (benzene ring H, 2H), 3.52-3.54 ppm (N-CH₂-CH₂-CH₂-Si, 2H, and CH₃-CH₂-O-Si, 2H), 1.65 ppm (N-CH₂-CH₂-CH₂-Si, 2H), 1.07 ppm (CH₃-CH₂-O-Si, 3H), 0.52 ppm (N-CH₂-CH₂-CH₂-Si, 2H), and -0.01 ppm (Si-(CH₃)₂, 6H) .

### [Synthesis Example 5: Synthesis of compound M-11]

The procedure of synthesis of compound M-2 was repeated, except that (2-methoxyethyl) p-formylbenzoate (4.82 g) was used instead of methyl p-formylbenzoate (3.80 g), to thereby yield compound M-11. The ¹H-NMR analytical results of compound M-11 were as follows.
¹H-NMR (solvent: CDCl₃) chemical shifts δ: 8.20 ppm (-N=CHAr, 1H), 8.07-8.09 ppm (benzene ring H, 2H), 7.96-7.97 ppm (benzene ring H, 2H), 4.37 ppm (-CH₂-O-C=O-, 2H), 3.81 ppm (-O-CH₂-, 2H), 3.52-3.54 ppm (N-CH₂-CH₂-CH₂-Si, 2H, and CH₃-CH₂-O-Si, 2H), 3.40 ppm (CH₃-O-, 3H), 1.65 ppm (N-CH₂-CH₂-CH₂-Si, 2H), 1.07 ppm (CH₃-CH₂-O-Si, 3H), 0.52 ppm (N-CH₂-CH₂-CH₂-Si, 2H), and -0.01 ppm (Si-(CH₃)₂, 6H) .

### [Synthesis Example 6: Synthesis of compound M-23]

The procedure of synthesis of compound M-2 was repeated, except that methyl 3'-formyl-[1,1'-biphenyl]-3-carboxylate (5.56 g) was used instead of methyl p-formylbenzoate (3.80 g), to thereby yield compound M-23. The ¹H-NMR analytical results of compound M-23 were as follows. ¹H-NMR (solvent: CDCl₃) chemical shifts δ: 8.40 ppm (-N=CHAr, 1H), 8.24-8.26 ppm (benzene ring H, 1H), 8.00-8.02 ppm (benzene ring H, 1H), 7.74-7.76 ppm (benzene ring H, 1H), 7.46-7.48 (benzene ring H, 1H), 7.27-7.29 ppm (benzene ring H, 1H), 7.10-7.00 ppm (benzene ring H, 2H), 6.76-6.78 ppm (benzene ring H, 1H), 3.84 ppm (CH₃-O-C=O-, 3H), 3.52-3.54 ppm (N-CH₂-CH₂-CH₂-Si, 2H, and CH₃-CH₂-O-Si, 2H), 1.65 ppm (N-CH₂-CH₂-CH₂-Si, 2H), 1.07 ppm (CH₃-CH₂-O-Si, 3H), 0.52 ppm (N-CH₂-CH₂-CH₂-Si, 2H), and -0.01 ppm (Si-(CH₃)₂, 6H) .

### <Synthesis of (modified) conjugated diene-based polymer>

### [Example 1: Synthesis and physical properties of modified conjugated diene-based polymer A-11

To an autoclave reactor (capacity: 5 L) with a nitrogen atmosphere, cyclohexane (2,000 g), 2,2-di(2-tetrahydrofuryl)propane (0.38 mmol) serving as a vinyl content-modifying agent (i.e., a randomizer), and styrene (100 g) and 1,3-butadiene (375 g) serving as monomers were added. The temperature of the contents of the reactor was adjusted to 10°C, and then a solution of n-butyllithium (4.7 mmol) serving as a polymerization initiator was added thereto, to thereby initiate polymerization. Polymerization was performed under adiabatic conditions, and the temperature rose up to 95°C.

When the polymerization conversion was confirmed to be 99% (i.e., 20 minutes after start of polymerization), 1,3-butadiene (25 g) was further added over 5 minutes, and methyl 4-(3-(ethoxydimethylsilyl)propylimino)benzoate (compound M-2) (1.1 mmol) serving as a termination end-modifying agent was added. The thus-obtained mixture was allowed to react for 20 minutes. To the polymer solution containing the formed modified conjugated diene-based polymer, 2,6-di-tert-butyl-p-cresol (4.40 g) serving as an antioxidant was added. Thereafter, the polymer solution was subjected to steam stripping for removal of the solvent, and the resultant matter was dried by means of a heat roller whose temperature was controlled at 110°C, to thereby yield a modified conjugated diene-based polymer (hereinafter may also be referred as "modified conjugated diene-based polymer A-1"). Table 2 shows properties including physical properties of modified conjugated diene-based polymer A-1.

### [Examples 2 to 5, 7, 8, and Comparative Examples 2 to 4: Synthesis and physical properties of modified conjugated diene-based polymers A-2 to A-5, A-7, A-8, and A-12 to A-14]

The procedure (i.e., polymerization, solvent removal, and drying) of Example 1 was repeated, except that the species and amounts of the reagents used were changed to those shown in Table 1, to thereby yield modified conjugated diene-based polymers A-2 to A-5, A-7, A-8, and A-12 to A-14. Table 2 shows properties including the physical properties of the thus-yielded modified conjugated diene-based polymers A-2 to A-5, A-7, A-8, and A-12 to A-14. In Table 1, the symbol "-" refers to that no corresponding compound was used.

### [Comparative Example 1: Synthesis and physical properties of conjugated diene-based polymer A-111

The procedure (i.e., polymerization, solvent removal, and drying) of Example 1 was repeated, except that the species and amounts of the reagents used were changed to those shown in Table 1, to thereby yield end-unmodified conjugated diene-based polymer A-11. Table 2 shows properties including the physical properties of the thus-yielded conjugated diene-based polymer A-11. In the present specification, a conjugated diene-based polymer having a modified end, and a conjugated diene-based polymer having an unmodified end may also be referred to collectively as a "(modified) conjugated diene-based polymer."

### [Example 6: Synthesis and physical properties of modified conjugated diene-based polymer A-6]

The procedure (i.e., polymerization, solvent removal, and drying) of Example 1 was repeated, except that the species and amounts of the reagents used were changed to those shown in Table 1, and the temperature of the reactor at the addition of a polymerization initiator was changed to 50°C, to thereby yield the modified conjugated diene-based polymer A-6. Table 2 shows properties including the physical properties of the thus-yielded modified conjugated diene-based polymer A-6.

### [Example 9: Synthesis and physical properties of modified conjugated diene-based polymer A-9]

Into an autoclave reactor (capacity: 16 L) (i.e., a first reactor) with a nitrogen atmosphere, 1,3-butadiene (25.0 g/min) and styrene (14.05 g/min) serving as monomers, cyclohexane (237.1 g/min) serving as a solvent, tetrahydrofuran (3.0 g/min) serving as a randomizer, n-butyllithium (18.67 mg/min) serving as a polymerization initiator were continuously charged. The inside temperature of the reactor was controlled at 75°C.

From the first reactor, the polymer solution was continuously extracted at a rate of 279.2 g/min, and compound M-5 was added to the recovered polymer solution at a rate of 23.72 mg/min. The combined flow was continuously fed to a second reactor, where further reaction was conducted. At an outlet of the second reactor, di-tert-butyl-p-cresol (0.88 parts by mass) was added to the polymerization product (rubber) (100 parts by mass). Thereafter, the thus-obtained mixture was subjected to steam stripping for removal of the solvent, and the resultant matter was dried by means of a heat roller whose temperature was controlled at 110°C, to thereby yield modified conjugated diene-based polymer A-9. Table 2 shows properties including the physical properties of the thus-yielded modified conjugated diene-based polymer A-9. The GPC curve obtained from a sample of the modified conjugated diene-based polymer A-9 exhibited a single modal profile. Thus, coupling ratio regarding 2 or more branches (%) and GPC peak height ratio were not calculated. In Table 2, omission of calculation is denoted by the symbol "-."

### [Example 10: Synthesis and physical properties of modified conjugated diene-based polymer A-10]

The procedure (i.e., polymerization, solvent removal, and drying) of Example 1 was repeated, except that the species and amounts of the reagents used were changed to those shown in Table 1, and the temperature of the reactor at the addition of a polymerization initiator was changed to 30°C, to thereby yield the modified conjugated diene-based polymer A-10. Table 2 shows properties including the physical properties of the thus-yielded modified conjugated diene-based polymer A-10.

**[Table 1]**

| | | | Example 1 | Example 2 | Example 3 | Example 4 | Example 5 | Example 6 | Example 7 | Example 8 | Example 9 *1) | Example 10 | Comparative Example 1 | Comparative Example 2 | Comparative Example 3 | Comparative Example 4 |
|---|---|---|---|---|---|---|---|---|---|---|---|---|---|---|---|---|
| (modified) conjugated diene-based polymer | | | A-1 | A-2 | A-3 | A-4 | A-5 | A-6 | A-7 | A-8 | A-9 | A-10 | A-11 | A-12 | A-13 | A-14 |
| formulation employed in polymerization | | | | | | | | | | | | | | | | |
| | solvent | | | | | | | | | | | | | | | |
| | : cyclohexane | (g) | 2000 | 2000 | 2000 | 2000 | 2000 | 2000 | 2000 | 2000 | 237.1 | 2000 | 2000 | 2000 | 2000 | 2000 |
| vinyl content modulating agent | | | | | | | | | | | | | | | | |
| | : V-1 | (mmol) | 0.38 | 0.38 | 0.38 | 0.38 | 0.38 | | 0.38 | 0.38 | | 0.38 | 0.38 | 0.38 | 0.38 | 0.38 |
| | : tetrahydrofuran | (g) | | | | | | 0.4 | | | 30 | | - | | | |
| | monomer | | | | | | | | | | | | | | | |
| | : styrene | (g) | 100 | 100 | 100 | 100 | 100 | 0 | 100 | 100 | 14.05 | 40 | 100 | 100 | 100 | 100 |
| | : butadiene | (g) | 375 | 375 | 375 | 375 | 375 | 400 | 375 | 375 | 250 | 320 | 375 | 375 | 375 | 375 |
| | : additional butadiene | (g) | 25 | 25 | 25 | 25 | 25 | 0 | 25 | 25 | | 40 | 25 | 25 | 25 | 25 |
| | polymerization initiator | | | | | | | | | | | | | | | |
| | : n-butyllithium | (mmol) | 4.7 | 4.7 | 4.7 | 4.7 | 4.7 | 4.5 | 9 | 4.7 | 18.67 mg/min | 2.9 | 4.7 | 4.7 | 4.7 | 4.7 |
| | : type of initiation end-modifying agent | | - | - | - | - | INI-1 | - | - | - | - | - | - | - | - | - |
| | : additive amount | (mmol) | - | - | - | - | 4.7 | - | - | - | - | - | - | - | - | - |
| | terminal end-modifying agent | | | | | | | | | | | | | | | |
| | : type | | M-2 | M-5 | M-9 | M-10 | M-2 | M-11 | M-2 | M-23 | M-5 | M-9 | - | M-101 | M-102 | M-103 |
| | | (mmol) | 1.1 | 1.1 | 0.55 | 1.1 | 1.1 | 1.4 | 21 | 1.1 | 23.72 mg/min | 0.7 | - | 4.3 | 1.1 | 0.55 |

| | | | | | | | | | | | | | | | | |
|---|---|---|---|---|---|---|---|---|---|---|---|---|---|---|---|---|
| *1) It represents the amount of each component added per minute (g/min unless otherwise noted) in continuous polymerization. | | | | | | | | | | | | | | | | |

Abbreviations of the compounds in Table 1 are as follows.
- V-1: 2,2-di(2-tetrahydrofuryl)propane
- INI-1: N-trimethylsilylpiperazine
- M-2, M-5, M-9 to M-11, and M-23: compounds represented by formulas (M-2), (M-5), (M-9) to (M-11), and (M-23), respectively
- M-101: 3-(N,N-bis(trimethylsilyl))aminopropylmethyldiethoxysilane
- M-102 and M-103: compounds represented by formulas (M-102) and (M-103), respectively

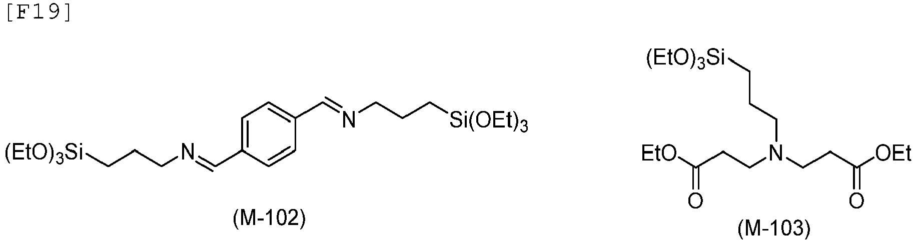

**[Table 2]**

| | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 |
|---|---|---|---|---|---|---|---|---|---|---|---|---|---|---|
| (modified) conjugated diene-based polymer | A-1 | A-2 | A-3 | A-4 | A-5 | A-6 | A-7 | A-8 | A-9 | A-10 | A-11 | A-12 | A-13 | A-14 |
| bonded styrene content (wt%) | 22 | 22 | 21 | 22 | 21 | 0 | 20 | 20 | 36 | 10 | 22 | 21 | 21 | 22 |
| vinyl bond content (mol%) | 54 | 54 | 53 | 55 | 53 | 20 | 55 | 55 | 43 | 40 | 55 | 53 | 54 | 53 |
| 1st peak molecular weight [*10⁴] | 19 | 20 | 20 | 19 | 22 | 23 | 12 | 19 | 25 | 38 | 19 | 20 | 19 | 19 |
| total weight average molecular weight [*10⁴] | 41 | 40 | 53 | 22 | 47 | 47 | 25 | 36 | 62 | 101 | 19 | 20 | 56 | 29 |
| coupling ratio regarding 2 or more branches (%) | 73 | 71 | 64 | 48 | 69 | 77 | 72 | 52 | - | 62 | 0 | 0 | 83 | 57 |
| GPC peak height ratio (2 months after rolling) index | 94 | 96 | 91 | 98 | 89 | 95 | 93 | 99 | - | 92 | 100 | 100 | 24 | 92 |
| mooney viscosity (ML1+4, 100°C) | 56 | 54 | 64 | 41 | 61 | 52 | 52 | 60 | 72 | 85 | 39 | 40 | 68 | 47 |
| cold flow (g/min) | 1.2 | 1.2 | 0.6 | 8.9 | 1.1 | 4.7 | 2.3 | 4.3 | 1.4 | 0.9 | ≥10 | >10 | 0.1 | 5.3 |

### <Production of polymer compositions and cross-linked products>

### [Examples 1 to 10 and Comparative Examples 1 to 4]

Each of the (modified) conjugated diene-based polymers A-1 to A-14 obtained in the above production processes was mixed with components at formulations shown in Table 3, and the mixture was kneaded, to thereby provide a polymer composition. The values of formulations in Table 3 are based on mass. The kneading procedure is as follows.
Specifically, a first kneading step was performed by means of a plastomill (capacity: 250 mL) equipped with a temperature controller. In the first kneading step, each of the modified conjugated diene-based polymers (unmodified conjugated diene-based polymer in the case of Comparative Example 1), butadiene rubber, silica, carbon black, a silane coupling agent, an extender oil, stearic acid, zinc oxide, and an antioxidant were kneaded at a filling ratio of 72% and a rotation speed of 60 rpm. Next, a second kneading step was performed. Specifically, the above obtained mixture was cooled to room temperature, and a vulcanization accelerator and sulfur were added thereto. The resultant mixture was kneaded, to thereby provide a polymer composition. The thus-obtained polymer composition was molded and vulcanized by means of a vulcanization press machine at 160°C for a predetermined time, to thereby provide a cross-linked product (vulcanized rubber). Rolling resistance, wet grip performance, and wear resistance were evaluated through the following procedures. Table 3 shows the results.

(1) Rolling resistance (50°C tanδ): The rolling resistance of a vulcanized rubber sample was measured by means of ARES-RDA (product of TA Instruments) at a shear strain of 3.0%, an angular speed of 100 rad/s, and 50°C, to thereby determine a loss tangent (tanδ (50°C)). The measurement was represented by an index with respect to that of Comparative Example 1 as 100. The greater the index, the smaller the energy loss and favorable rolling resistance (low fuel consumption performance).
(2) Wet grip performance (0°C tanδ): The wet grip performance of a vulcanized rubber sample was measured by means of ARES-RDA (product of TA Instruments) at a shear strain of 0.14%, an angular speed of 100 rad/s, and 0°C, to thereby determine a loss tangent (tanδ (0°C)). The measurement was represented by an index with respect to that of Comparative Example 1 as 100. The greater the index, the more suitable the wet grip performance.
(3) Wear resistance (DIN wear test): The wear resistance of a vulcanized rubber sample was measured by means of a DIN wear tester (product of Toyo Seiki Seisaku-sho, Ltd.) in accordance with JIS K6264 at a load of 10 N and 25°C. The measurement was represented by an index with respect to that of Comparative Example 1 as 100. The greater the index, the more suitable the were resistance.

**[Table 3]**

| Formulation | Example 1 | Example 2 | Example 3 | Example 4 | Example 5 | Example 6 | Example 7 | Example 8 | Example 9 | Example 10 | Com parative Example 1 | Com parative Example 2 | Com parative Example 3 | Com parative Example 4 |
|---|---|---|---|---|---|---|---|---|---|---|---|---|---|---|
| (modified) conjugated diene-based polymer | A-1 | A-2 | A-3 | A-4 | A-5 | A-6 | A-7 | A-8 | A-9 | A-10 | A-11 | A-12 | A-13 | A-14 |
| | 70 | 70 | 70 | 70 | 70 | 70 | 70 | 70 | 70 | 70 | 70 | 70 | 70 | 70 |
| butadiene rubber *1) | 30 | 30 | 30 | 30 | 30 | 30 | 30 | 30 | 30 | 30 | 30 | 30 | 30 | 30 |
| silica *2) | 70 | 70 | 70 | 70 | 70 | 70 | 70 | 70 | 70 | 70 | 70 | 70 | 70 | 70 |
| carbon black *3) | 5 | 5 | 5 | 5 | 5 | 5 | 5 | 5 | 5 | 5 | 5 | 5 | 5 | 5 |
| silane coupling agent *4) | 56 | 5.6 | 56 | 56 | 56 | 56 | 56 | 56 | 56 | 56 | 56 | 56 | 5.6 | 56 |
| extender oil *5) | 30 | 30 | 30 | 30 | 30 | 30 | 30 | 30 | 30 | 30 | 30 | 30 | 30 | 30 |
| stearic acid | 2 | 2 | 2 | 2 | 2 | 2 | 2 | 2 | 2 | 2 | 2 | 2 | 2 | 2 |
| zinc oxide | 3 | 3 | 3 | 3 | 3 | 3 | 3 | 3 | 3 | 3 | 3 | 3 | 3 | 3 |
| antioxidant *6) | 1 | 1 | 1 | 1 | 1 | 1 | 1 | 1 | 1 | 1 | 1 | 1 | 1 | 1 |
| vulcanization accelerator D *7) | 1.5 | 1.5 | 1.5 | 1.5 | 1.5 | 1.5 | 1.5 | 1.5 | 1.5 | 1.5 | 1.5 | 1.5 | 1.5 | 1.5 |
| vulcanization accelerator CZ *8) | 1.8 | 1.8 | 1.8 | 1.8 | 1.8 | 1.8 | 1.8 | 1.8 | 1.8 | 1.8 | 1.8 | 1.8 | 1.8 | 1.8 |
| sulfur | 1.5 | 1.5 | 1.5 | 1.5 | 1.5 | 1.5 | 1.5 | 1.5 | 1.5 | 1.5 | 1.5 | 1.5 | 1.5 | 1.5 |

| Evaluation | | | | | | | | | | | | | | |
|---|---|---|---|---|---|---|---|---|---|---|---|---|---|---|
| 50°Ctanδ | 122 | 118 | 126 | 114 | 126 | 126 | 135 | 110 | 118 | 121 | 100 | 139 | 136 | 108 |
| 0°Ctanδ | 126 | 124 | 127 | 121 | 136 | 128 | 130 | 118 | 123 | 127 | 100 | 128 | 129 | 126 |
| DIN wear | 125 | 128 | 133 | 119 | 129 | 124 | 110 | 110 | 135 | 138 | 100 | 127 | 141 | 123 |

Commercial products shown in table 3 were used as respective components.
*1: BR01 (product of ENEOS Material); *2: ZEOSIL 1165MP (product of Solvay); *3: Dia Black N330 (product of Mitsubishi Chemical Corporation); *4: Si75 (product of Evonik), *5: Process oil T-DAE (product of ENEOS), *6: Ozonone 6C (product of Seiko Chemical), *7: Nocceler D (Ouchi Shinko Chemical Industrial Co., Ltd.); *8: Nocceler CZ-G

### (Ouchi Shinko Chemical Industrial Co., Ltd.)

The modified conjugated diene-based polymers of Examples 1 to 8 and 10, produced by use of the compound [M] as a termination end-modifying agent, were compared with the unmodified conjugated diene-based polymer of Comparative Example 1 and the modified conjugated diene-based polymers of Comparative Examples 2 to 4. In the group corresponding to almost the same GPC peak height ratio (2 months after rolling), as shown in Table 2, the conjugated diene-based polymers produced by use of the compound [M] as a termination end-modifying agent exhibited a cold flow smaller than that of the conjugated diene-based polymer produced by use of no compound [M] (e.g., comparison of Example 1 with Comparative Example 4). Similarly, in the group corresponding to almost the same cold flow, the conjugated diene-based polymers produced by use of the compound [M] as a termination end-modifying agent exhibited a GPC peak height ratio (2 months after rolling) greater than that of the conjugated diene-based polymer produced by use of no compound [M] (e.g., comparison of Example 1 with Comparative Example 3). Through these comparison results, the modified conjugated diene-based polymers produced by use of the compound [M] as a termination end-modifying agent was confirmed to provide consistent quality and shape stability in a well-balanced manner.

Also, the consistency in quality of the modified conjugated diene-based polymer A-9 of Example 9 was evaluated on the basis of Mooney viscosity as an index instead of the GPC peak height ratio. Specifically, similar to Examples 1 to 8 and 10, the consistency in quality was evaluated by the change from the Mooney viscosity immediately after drying by means of a heat roller, to the Mooney viscosity after storage for two months at 25°C after drying by means of a heat roller. The Mooney viscosity after storage for two months at 25°C was represented by an index with respect to the Mooney viscosity immediately after drying as 100. As the index after storage for two months at 25°C approaches 100, the change over time in Mooney viscosity is small; i.e., the consistency in quality is favorable. In an actual measurement in Example 9, the Mooney viscosity (index) after storage for two months at 25°C was 110.

In addition, as is clear from Table 3, vulcanized rubbers produced from the polymer compositions of Examples 1 to 10 exhibited considerable enhancement in rolling resistance, wet grip performance, and wear resistance, as compared with the polymer composition of Comparative Example 1 employing an unmodified conjugated diene-based polymer. Thus, the modified conjugated diene-based polymer produced by use of the compound [M] as a termination end-modifying agent has proven to achieve excellent rubber performances including rolling resistance (low fuel consumption performance), wet grip performance, and wear resistance as well as excellent consistency in quality and shape stability.

## Claims

1. A method of producing a modified conjugated diene-based polymer, the method comprising
a step of reacting a conjugated diene-based polymer having an active end with a compound [M],
wherein the conjugated diene-based polymer having an active end is a polymer which is produced by polymerizing a monomer including a conjugated diene compound in the presence of a polymerization initiator including at least one of an alkali metal compound and an alkaline earth metal compound, and
the compound [M] is a compound having a functional group F1, a functional group F2, and a functional group F3 and no active hydrogen,
wherein F1 is at least one functional group selected from the group consisting of a group "*¹-C(=E)-O-", group "*¹-C(=O)-NR²-", group "*¹-C≡N", group "*¹-C(=E)-R⁴", and group "*¹-C(=NR⁶)-R⁵" (wherein E is an oxygen atom or a sulfur atom; each of R² and R⁶ independently represents a C1 to C20 hydrocarbyl group; each of R⁴ and R⁵ independently represents a hydrogen atom, a tertiary alkyl group, group "-CR³¹=CR³²-R³³", and group "-C≡CR³⁴" (wherein each of R³¹, R³², R³³, and R³⁴ independently represents a hydrogen atom or a C1 to C20 hydrocarbyl group), or an aryl group, and "*¹" represents a bond to a tertiary carbon atom or a carbon atom forming a carbon-carbon unsaturated bond in a chain structure or a ring structure);
F2 is at least one functional group selected from the group consisting of group "-C(R⁷)=N-" (wherein R⁷ represents a hydrogen atom or a C1 to C10 hydrocarbyl group, except for a group corresponding to the functional group F1), a protected primary amino group, a protected secondary amino group, and a tertiary amino group; and
F3 is at least one functional group selected from the group consisting of group "-Si(R^{a})₂(OR⁹)" and group "-Si(R¹⁰)₂(NR¹¹R¹²)" (wherein each of R⁸, R¹⁰, R¹¹, and R¹² independently represents a C1 to C20 hydrocarbyl group; and R⁹ represents a C1 to C20 hydrocarbyl group or a C3 to C30 monovalent group in which methylene groups forming a hydrocarbyl group are partially substituted with an oxygen atom).

2. The method of producing the modified conjugated diene-based polymer according to claim 1, wherein the compound [M] is at least one species selected from the group consisting of a compound represented by formula (1) and a compound represented by formula (2): 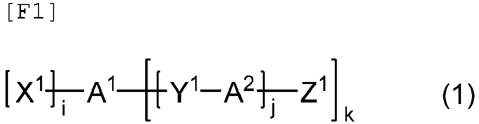
wherein X¹ represents group "*¹-C(=E)-OR¹", group "*¹-C(=O)-NR²R³", group "*¹-C≡N", group "*¹-C(=E)-R⁴", or group "*¹-C(=NR⁶)-R⁵"; E represents an oxygen atom or a sulfur atom; R¹ represents a C1 to C20 hydrocarbyl group or a C3 to C30 monovalent group in which methylene groups forming a hydrocarbyl group are partially substituted with an oxygen atom; each of R², R³, and R⁶ independently represents a C1 to C20 hydrocarbyl group; each of R⁴ and R⁵ independently represents a hydrogen atom, a tertiary alkyl group, group "-CR³¹=CR³²-R³³", group "-C≡CR³⁴" (wherein each of R³¹, R³², R³³, and R³⁴ independently represents a hydrogen atom or a C1 to C20 hydrocarbyl group), or an aryl group; "*¹" represents a bond to a tertiary carbon atom or a carbon atom forming a carbon-carbon unsaturated bond in a chain structure or a ring structure, among the carbon atoms included in A¹; Y¹ represents "*²-C(R⁷)=N-", group "-C(R⁷)=N-*²", group "-N(SiR¹³R¹⁴R¹⁵)-", or group "-NR¹⁶-"; R⁷ represents a hydrogen atom or a C1 to C10 hydrocarbyl group; "*²" represents a bond to A¹; each of R¹³, R¹⁴, R¹⁵, and R¹⁶ independently represents a C1 to C20 hydrocarbyl group; Z¹ represents group "-Si(R⁸)₂(OR⁹)" or group "-Si(R¹⁰)₂(NR¹¹R¹²)"; each of R⁸, R¹⁰, R¹¹, and R¹² independently represents a C1 to C20 hydrocarbyl group; R⁹ represents a C1 to C20 hydrocarbyl group or a C3 to C30 monovalent group in which methylene groups forming a hydrocarbyl group are partially substituted with an oxygen atom); A¹ represents a C1 to C20 (i+k)-valent hydrocarbon group or a C1 to C20 (i+k)-valent group having at least one atom selected from the group consisting of a nitrogen atom, an oxygen atom, and a sulfur atom, and no active hydrogen; A² represents a hydrocarbylene group; i, j, and k each are an integer of 1 to 10 and satisfy 2≤i+k≤10; and X¹, Y¹, Z¹, and A² are identical to or different from one another, when a plurality of groups of each member are present: 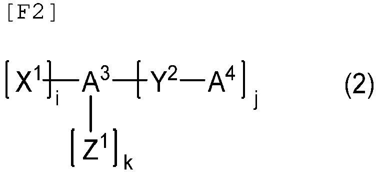
wherein X¹ and Z¹ have the same definitions as those in formula (1); "*¹" in X¹ represents a bond to a tertiary carbon atom or a carbon atom forming a carbon-carbon unsaturated bond in a chain structure or a ring structure, among the carbon atoms included in A³; Y² represents "*³-C(R⁷)=N-", group "-C(R⁷)=N-*³", group "-N(SiR¹³R¹⁴R¹⁵)- ", or group "-NR¹⁶-"; R⁷, R¹³, R¹⁴, R¹⁵, and R¹⁶ have the same definitions as those of formula (1); "*³" represents a bond to A³; A³ represents a C1 to C20 (i+j+k)-valent hydrocarbon group or a C1 to C20 (i+j+k)-valent group having at least one atom selected from the group consisting of a nitrogen atom, an oxygen atom, and a sulfur atom, and no active hydrogen; A⁴ represents a hydrocarbyl group; i, j, and k each are an integer of 1 to 10 and satisfy 2≤i+j+k≤10; and X¹, Y², Z¹, and A⁴ are identical to or different from one another, when a plurality of groups of each member are present.

3. The method of producing the modified conjugated diene-based polymer according to claim 1, wherein the polymer has a weight average molecular weight of 100,000 to 2,000,000, as determined through gel permeation chromatography (GPC) after reaction of the conjugated diene-based polymer having an active end with the compound [M].

4. The method of producing the modified conjugated diene-based polymer according to claim 1, wherein the monomer further includes an aromatic vinyl compound.

5. The method of producing the modified conjugated diene-based polymer according to claim 1, wherein the monomer is polymerized by use of a mixture of at least one of an alkali metal compound and an alkaline earth metal compound with a compound having a functional group which covalently bonds or interacts with silica, as the polymerization initiator.

6. A modified conjugated diene-based polymer, which is a reaction product of a conjugated diene-based polymer having an active end with a compound [M],
wherein the conjugated diene-based polymer having an active end is a polymer which is produced by polymerizing a monomer including a conjugated diene compound in the presence of a polymerization initiator including at least one of an alkali metal compound and an alkaline earth metal compound, and
the compound [M] is a compound having a functional group F1, a functional group F2, and a functional group F3 and no active hydrogen,
wherein F1 is at least one functional group selected from the group consisting of a group "*¹-C(=E)-O-", group "*¹-C(=O)-NR²-", group "*¹-C≡N", group "*¹-C(=E)-R⁴", and group "*¹-C(=NR⁶)-R⁵" (wherein E is an oxygen atom or a sulfur atom; each of R² and R⁶ independently represents a C1 to C20 hydrocarbyl group; each of R⁴ and R⁵ independently represents a hydrogen atom, a tertiary alkyl group, group "-CR³¹=CR³²-R³³", and group "-C≡CR³⁴" (wherein each of R³¹, R³², R³³, and R³⁴ independently represents a hydrogen atom or a C1 to C20 hydrocarbyl group), or an aryl group, and "*¹" represents a bond to a tertiary carbon atom or a carbon atom forming a carbon-carbon unsaturated bond in a chain structure or a ring structure);
F2 is at least one functional group selected from the group consisting of group "-C(R⁷)=N-" (wherein R⁷ represents a hydrogen atom or a C1 to C10 hydrocarbyl group, except for a group corresponding to the functional group F1), a protected primary amino group, a protected secondary amino group, and a tertiary amino group; and
F3 at least one functional group selected from the group consisting of group "-Si(R⁸)₂(OR⁹)" and group "-Si(R¹⁰)₂(NR¹¹R¹²)" (wherein each of R⁸, R¹⁰, R¹¹, and R¹² independently represents a C1 to C20 hydrocarbyl group; and R⁹ represents a C1 to C20 hydrocarbyl group or a C3 to C30 monovalent group in which methylene groups forming a hydrocarbyl group are partially substituted with an oxygen atom).

7. A modified conjugated diene-based polymer represented by formula (3) or (4) : 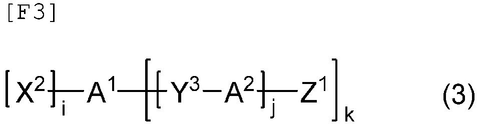
wherein X² is represented by any of the groups represented by formulas (5) to (8); Y³ represents a group represented by formula (9), a group represented by formula (10), group "-N(SiR¹³R¹⁴R¹⁵), or group "-NR¹⁶-"; each of R¹³, R¹⁴, R¹⁵, and R¹⁶ independently represents a C1 to C20 hydrocarbyl group; Z¹ represents group "-Si(R⁸)₂(OR⁹)" or group "-Si(R¹⁰)₂(NR¹¹R¹²)"; each of R⁸, R¹⁰, R¹¹, and R¹² independently represents a C1 to C20 hydrocarbyl group; R⁹ represents a C1 to C20 hydrocarbyl group or a C3 to C30 monovalent group in which methylene groups forming a hydrocarbyl group are partially substituted with an oxygen atom; A¹ represents a C1 to C20 (i+k)-valent hydrocarbon group or a C1 to C20 (i+k)-valent group having at least one atom selected from the group consisting of a nitrogen atom, an oxygen atom, and a sulfur atom, and no active hydrogen; A² represents a hydrocarbylene group; i, j, and k each are an integer of 1 to 10 and satisfy 2≤i+k≤10; and X², Y³, Z¹, and A² are identical to or different from one another, when a plurality of groups of each member are present: 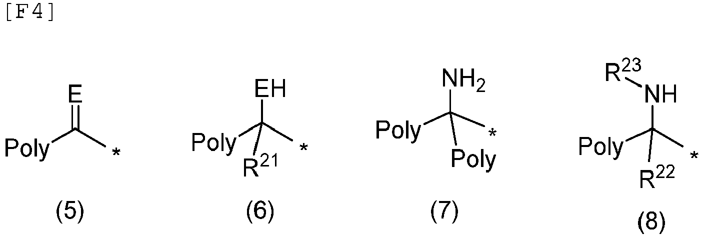
wherein Poly represents a modified or unmodified conjugated diene-based polymer chain; E represents an oxygen atom or a sulfur atom; R²¹ represents a hydrogen atom, a tertiary alkyl group, group "-CR³¹=CR³²-R³³", group "-C≡CR³⁴" (each of R³¹, R³², R³³, and R³⁴ independently represents a hydrogen atom or a C1 to C20 hydrocarbyl group), an aryl group, or a modified or unmodified conjugated diene-based polymer chain; R²² represents a hydrogen atom, a tertiary alkyl group, group "-CR³¹=CR³²-R³³", group "-C≡CR³⁴" or an aryl group; R²³ represents a C1 to C20 hydrocarbyl group; and "*" represents a bond to a tertiary carbon atom or a carbon atom forming a carbon-carbon unsaturated bond in a chain structure or a ring structure, among the carbon atoms included in A¹: 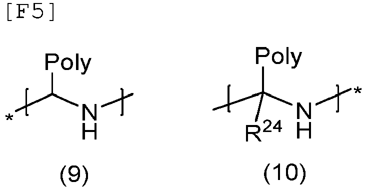
wherein Poly represents a modified or unmodified conjugated diene-based polymer chain; R²⁴ represents a C1 to C20 hydrocarbyl group; and "*" represents a bond to A¹: 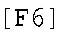 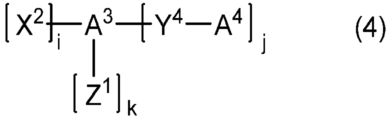
wherein X² and Z¹ have the same definitions as those in formula (3); "*" in formulas (5) to (8) represents a bond to a tertiary carbon atom or a carbon atom forming a carbon-carbon unsaturated bond in a chain structure or a ring structure, among the carbon atoms included in A³; Y⁴ has the same definition as that Y³ in formula (3); "*" in formulas (9) and (10) represents a bond to A³; A³ represents a C1 to C20 (i+j+k)-valent hydrocarbon group or a C1 to C20 (i+j+k)-valent group having at least one atom selected from the group consisting of a nitrogen atom, an oxygen atom, and a sulfur atom, and no active hydrogen; A⁴ represents a hydrocarbyl group; i, j, and k each are an integer of 1 to 10 and satisfy 2≤i+j+k≤10; and X², Y⁴, Z¹, and A⁴ are identical to or different from one another, when a plurality of groups of each member are present.

8. A polymer composition comprising the modified conjugated diene-based polymer produced through the method as recited in any one of claims 1 to 5 or the modified conjugated diene-based polymer as recited in claim 6 or 7, and at least one species selected from the group consisting of silica and carbon black.

9. A cross-linked product formed by cross-linking of the polymer composition as recited in claim 8.

10. A tire having a tread and a sidewall, wherein one or both of them is formed by use of the polymer composition as recited in claim 8.

11. A compound represented by formula (1) or (2): 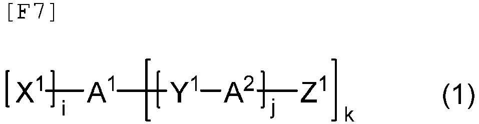
wherein X¹ represents group "*¹-C(=E)-OR¹", group "*¹-C(=O)-NR²R³", group "*¹-C≡N", group "*¹-C(=E)-R⁴", or group "*¹-C(=NR⁶)-R⁵"; E represents an oxygen atom or a sulfur atom; R¹ represents a C1 to C20 hydrocarbyl group or a C3 to C30 monovalent group in which methylene groups forming a hydrocarbyl group are partially substituted with an oxygen atom; each of R², R³, and R⁶ independently represents a C1 to C20 hydrocarbyl group; each of R⁴ and R⁵ independently represents a hydrogen atom, a tertiary alkyl group, group "-CR³¹=CR³²-R³³", group "-C≡CR³⁴" (wherein each of R³¹, R³², R³³, and R³⁴ independently represents a hydrogen atom or a C1 to C20 hydrocarbyl group), or an aryl group; "*¹" represents a bond to a tertiary carbon atom or a carbon atom forming a carbon-carbon unsaturated bond in a chain structure or a ring structure, among the carbon atoms included in A¹; Y¹ represents "*²-C(R⁷)=N-", group "-C(R⁷)=N-*²", group "-N(SiR¹³R¹⁴R¹⁵)- ", or group "-NR¹⁶-"; R⁷ represents a hydrogen atom or a C1 to C10 hydrocarbyl group; "*²" represents a bond to A¹; each of R¹³, R¹⁴, R¹⁵, and R¹⁶ independently represents a C1 to C20 hydrocarbyl group; Z¹ represents group "-Si(R⁸)₂(OR⁹)" or group "-Si(R¹⁰)₂(NR¹¹R¹²)"; each of R⁸, R¹⁰, R¹¹, and R¹² independently represents a C1 to C20 hydrocarbyl group; R⁹ represents a C1 to C20 hydrocarbyl group or a C3 to C30 monovalent group in which methylene groups forming a hydrocarbyl group are partially substituted with an oxygen atom; A¹ represents a C1 to C20 (i+k)-valent hydrocarbon group or a C1 to C20 (i+k)-valent group having at least one atom selected from the group consisting of a nitrogen atom, an oxygen atom, and a sulfur atom, and no active hydrogen; A² represents a hydrocarbylene group; i, j, and k each are an integer of 1 to 10 and satisfy 2≤i+k≤10; and X¹, Y¹, Z¹, and A² are identical to or different from one another, when a plurality of groups of each member are present: 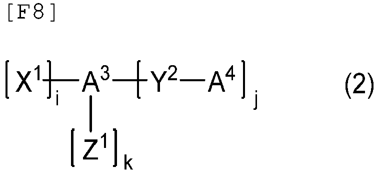
wherein X¹ and Z¹ have the same definitions as those in formula (1); "*¹" in X¹ represents a bond to a tertiary carbon atom or a carbon atom forming a carbon-carbon unsaturated bond in a chain structure or a ring structure, among the carbon atoms included in A³; Y² represents "*³-C(R⁷)=N-", group "-C(R⁷)=N-*³", group "-N(SiR¹³R¹⁴R¹⁵)-", or group "-NR¹⁶-"; R⁷, R¹³, R¹⁴, R¹⁵, and R¹⁶ have the same definitions as those of formula (1); "*³" represents a bond to A³; A³ represents a C1 to C20 (i+j+k)-valent hydrocarbon group or a C1 to C20 (i+j+k)-valent group having at least one atom selected from the group consisting of a nitrogen atom, an oxygen atom, and a sulfur atom, and no active hydrogen; A⁴ represents a hydrocarbyl group; i, j, and k each are an integer of 1 to 10 and satisfy 2≤i+j+k≤10; and X¹, Y⁴, Z¹, and A⁴ are identical to or different from one another, when a plurality of groups of each member are present.
